(19)

Europäisches Patentamt
European Patent Office
Office européen des brevets

(11) **EP 4 668 791 A1**

(12) **EUROPEAN PATENT APPLICATION**
published in accordance with Art. 153(4) EPC

(43) Date of publication:
24.12.2025  Bulletin 2025/52

(51) International Patent Classification (IPC):
H04W 4/02 (2018.01)   H04W 64/00 (2009.01)
H04W 24/10 (2009.01)

(21) Application number: 24756208.5

(22) Date of filing: 07.02.2024

(52) Cooperative Patent Classification (CPC):
H04L 27/26; H04W 4/02; H04W 24/08;
H04W 24/10; H04W 64/00

(86) International application number:
PCT/CN2024/076558

(87) International publication number:
WO 2024/169835 (22.08.2024 Gazette 2024/34)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 17.02.2023  CN 202310184041

(71) Applicant: Datang Mobile Communications
Equipment Co., Ltd.
Beijing 100085 (CN)

(72) Inventors:
• FANG, Rongyi
  Beijing 100085 (CN)
• REN, Bin
  Beijing 100085 (CN)
• REN, Xiaotao
  Beijing 100085 (CN)
• DA, Ren
  Beijing 100085 (CN)

(74) Representative: Maiwald GmbH
Engineering
Elisenhof
Elisenstrasse 3
80335 München (DE)

(54) **METHOD AND APPARATUS FOR ACQUIRING CARRIER PHASE MEASUREMENT VALUE, FIRST DEVICE, AND LMF ENTITY**

(57)    The present disclosure provides a method and apparatus for acquiring a carrier phase measurement value, a first device, and a location management function (LMF) entity. The method is applied to a first device and comprises: receiving first information from an LMF entity, the first information being used for instructing the first device to report a carrier phase measurement value of a target subcarrier; acquiring the carrier phase measurement value of the target subcarrier; and sending the carrier phase measurement value to the LMF entity.

Receiving first information from a Location Management Function (LMF) entity, wherein the first information is configured to instruct the first device to report a carrier phase measurement value of a target subcarrier — 101

Obtaining the carrier phase measurement value of the target subcarrier — 102

Sending the carrier phase measurement value to the LMF entity — 103

FIG.  1

**Description**

**CROSS-REFERENCE TO RELATED APPLICATION**

The present disclosure claims the priority of Chinese Patent Application No. 202310184041.X entitled "Method and Apparatus for Obtaining Carrier Phase Measurement Value, Apparatus, First Device, and LMF Entity" filed on February 17, 2023, the disclosure of which is hereby incorporated by reference in its entirety.

**TECHNICAL FIELD**

The present disclosure relates to the field of communications technologies, and in particular, to a method and an apparatus of obtaining a carrier phase measurement value, a first device, and an LMF entity.

**BACKGROUND**

A basic principle of a wireless positioning technology is that a transmitter transmits a pilot signal, a receiver receives and measures the signal, obtains measurement values such as a delay, an angle and a phase, and then performs corresponding position calculation to obtain a position estimation value. In a positioning scheme depending on a phase measurement value, the measurement resolution is 8 mm or less under a carrier frequency of 3.5 GHz by virtue of the high-resolution measurement precision caused by a small wavelength, and the positioning accuracy can be improved to a centimeter level under appropriate conditions, so the positioning scheme is mainly applied to the Global Navigation Satellite System (GNSS).

However, there is currently no support for reporting an NR carrier phase measurement value, that is, a specific definition of a carrier phase measurement value for multi-symbol carrier phase positioning (CPP) is absent in a New Radio (NR) cellular positioning, and there is no reasonable mechanism of reporting a measurement value.

**SUMMARY**

An objective of the present disclosure is to provide a method and an apparatus of obtaining a carrier phase measurement value, a first device, and an LMF entity, to resolve a problem in the related art that a carrier phase measurement value of an NR system cannot be reported.

According to a first aspect, a method of obtaining a carrier phase measurement value, applied to a first device, is provided to address the above technical problem. The method includes: receiving first information from a Location Management Function (LMF) entity, wherein the first information is configured to instruct the first device to report a carrier phase measurement value of a target subcarrier; obtaining the carrier phase measurement value of the target subcarrier; and sending the carrier phase measurement value to the LMF entity.

In some embodiments, the first information includes at least one of following: a frequency corresponding to the target subcarrier; an identifier (ID) of the target subcarrier; an index of a carrier set corresponding to the target subcarrier; a physical resource block (PRB) index corresponding to the target subcarrier; a PRB set index corresponding to the target subcarrier; a positioning frequency layer index value corresponding to the target subcarrier; or an index value of a component carrier (CC) corresponding to the target subcarrier.

In some embodiments, the method further includes: receiving second information from the LMF entity, wherein the second information is configured to instruct the first device to report an instantaneous carrier phase (Instantaneous Carrier Phase, ICP) measurement value of the target subcarrier, or the second information is configured to indicate the first device to report an accumulated carrier phase (Accumulated Carrier Phase, ACP) measurement value of the target subcarrier.

In some embodiments, in a case that each carrier phase measurement value corresponds to an Orthogonal Frequency Division Multiplexing (OFDM) symbol, sending the carrier phase measurement value to the LMF entity includes sending at least one of following carrier phase measurement values of the target subcarrier to the LMF entity: an instantaneous carrier phase measurement value corresponding to each OFDM symbol; an accumulated phase measurement value corresponding to each OFDM symbol; an instantaneous carrier phase measurement value corresponding to each OFDM symbol and a corresponding timestamp; or an accumulated phase measurement value corresponding to each OFDM symbol and a corresponding timestamp; wherein a granularity of the timestamp is an OFDM symbol.

In some embodiments, in a case that each carrier phase measurement value corresponds to one resource block, sending the carrier phase measurement value to the LMF entity includes sending at least one of following carrier phase measurement values of the target subcarrier to the LMF entity: an instantaneous carrier phase measurement value corresponding to each resource block; an accumulated phase measurement value corresponding to each resource block; a timestamp corresponding to the instantaneous carrier phase measurement value; or a timestamp corresponding to the accumulated phase measurement value; wherein a granularity of the timestamp is an OFDM symbol or a resource block.

In some embodiments, the carrier phase measurement value includes at least one of following measurement values: an absolute phase of arrival (POA); or a phase difference between the absolute POA and a reference POA.

In some embodiments, the absolute phase of arrival (POA) includes at least one of the following: POA of the first device relative to a second device on a target path; POA of the first device relative to a second device on a target antenna; POA of the first device relative to the second device on a target frequency layer; POA of the first device relative to a second device on a target OFDM symbol; POA of the first device relative to a second device on a target resource; or POA of the first device relative to a second device on a target subcarrier; wherein the first device is a receiving end and the second device is a transmitting end.

In some embodiments, a phase difference between the absolute POA and the reference POA includes at least one of following: a difference between the POA of the first device relative to the second device on the target path and a POA on a reference path; a difference between the POA of the first device relative to the second device on the target antenna and a POA on a reference antenna; a difference between the POA of the first device relative to the second device on the target frequency layer and a POA on a reference frequency layer; a difference between the POA of the first device relative to the second device on the target OFDM symbol and a POA on a reference OFDM symbol; a difference between the POA of the first device relative to the second device on the target resource and a POA on a reference resource; or a difference between the POA of the first device relative to the second device on the target subcarrier and a POA on a reference subcarrier; wherein the first device is a receiving end and the second device is a transmitting end.

In some embodiments, the method further includes: sending third information to the LMF, wherein the third information includes at least one of the following: a quantity of resource elements (REs) that differ between a subcarrier actually used to measure and the target subcarrier; a quantity of symbols that differ between OFDM symbols actually used to measure and target OFDM symbols; a delay difference between a first path and a second path corresponding to the carrier phase measurement value; a spectral peak width of a first path corresponding to the carrier phase measurement value; a root-mean-square error of the carrier phase measurement value; or a variance of the carrier phase measurement value.

In some embodiments, the method further includes: sending fourth information to the LMF, wherein the fourth information includes at least one of following: a downlink reference signal time difference (DL-RSTD) and a corresponding timestamp; an uplink relative time of arrival (UL-RTOA) and a corresponding timestamp; an uplink angle of arrival (UL-AOA) and a corresponding timestamp; a time difference between receiving and transmitting of the first device and a corresponding timestamp; an uplink reference signal receiving power (UL-RSRP) and a corresponding timestamp; a downlink reference signal receiving power (DL-RSRP) and a corresponding timestamp; an uplink reference signal receiving path power (UL-RSRPP) and a corresponding timestamp; or a downlink reference signal receiving path power (DL-RSRPP) and a corresponding timestamp; wherein a granularity of the timestamp is an OFDM symbol.

In some embodiments, a range of the carrier phase measurement value is: $0 \le$ the carrier phase measurement value $< a \times \pi \times C_1$; a is a positive integer; $C_1$ is granularity, and a unit of $C_1$ is radian; or $0 \le$ the carrier phase measurement value $< 2^b \times C_2$; b is a positive integer; $C_2$ is granularity, and a unit of $C_2$ is meter.

According to a second aspect, a method of obtaining a carrier phase measurement value, applied to an LMF entity, is provided to address the above technical problem. The method includes: sending first information to a first device, wherein the first information is configured to instruct the first device to report a carrier phase measurement value of a target subcarrier; receiving the carrier phase measurement value from the first device.

In some embodiments, the first information includes at least one of following: a frequency corresponding to the target subcarrier; an identifier (ID) of the target subcarrier; an index of a carrier set corresponding to the target subcarrier; a physical resource block (PRB) index corresponding to the target subcarrier; a PRB set index corresponding to the target subcarrier; a positioning frequency layer index value corresponding to the target subcarrier; or an index value of a component carrier (CC) corresponding to the target subcarrier.

In some embodiments, the method further includes: sending second information to the first device, wherein the second information is configured to instruct the first device to report an instantaneous carrier phase measurement value of the target subcarrier, or the second information is configured to indicate the first device to report an accumulated carrier phase measurement value of the target subcarrier.

In some embodiments, in a case that each carrier phase measurement value corresponds to an Orthogonal Frequency Division Multiplexing (OFDM) symbol, receiving the carrier phase measurement value from the first device includes receiving at least one of following carrier phase measurement values of the target subcarrier from the first device: an instantaneous carrier phase measurement value corresponding to each OFDM symbol; an accumulated phase measurement value corresponding to each OFDM symbol; an instantaneous carrier phase measurement value corresponding to each OFDM symbol and a symbol-level timestamp; or an accumulated phase measurement value corresponding to each OFDM symbol and a symbol-level timestamp; wherein a granularity of the timestamp is an OFDM symbol.

In some embodiments, in a case that each carrier phase measurement value corresponds to one resource block, receiving the carrier phase measurement value from the first device includes receiving from the first device at least one of following carrier phase measurement values of the target subcarrier: an instantaneous carrier phase measurement value corresponding to each resource block; an accumulated phase measurement value corresponding to each resource block; a timestamp corresponding to the instantaneous carrier phase measurement value; or a timestamp corresponding to the accumulated phase measurement value; wherein a granularity of the timestamp is an OFDM symbol or a resource block.

In some embodiments, the carrier phase measurement value includes at least one of following measurement values: an absolute phase of arrival (POA); or a phase difference between the absolute POA and a reference POA.

In some embodiments, the absolute phase of arrival (POA) includes at least one of the following: POA of the first device relative to a second device on a target path; POA of the first device relative to a second device on a target antenna; POA of the first device relative to the second device on a target frequency layer; POA of the first device relative to a second device on a target OFDM symbol; POA of the first device relative to a second device on a target resource; or POA of the first device relative to a second device on a target subcarrier; wherein the first device is a receiving end and the second device is a transmitting end.

In some embodiments, a phase difference between the absolute POA and the reference POA includes at least one of following: a difference between the POA of the first device relative to the second device on the target path and a POA on a reference path; a difference between the POA of the first device relative to the second device on the target antenna and a POA on a reference antenna; a difference between the POA of the first device relative to the second device on the target frequency layer and a POA on a reference frequency layer; a difference between the POA of the first device relative to the second device on the target OFDM symbol and a POA on a reference OFDM symbol; a difference between the POA of the first device relative to the second device on the target resource and a POA on a reference resource; or a difference between the POA of the first device relative to the second device on the target subcarrier and a POA on a reference subcarrier; wherein the first device is a receiving end and the second device is a transmitting end.

In some embodiments, the method further includes: receiving third information from the first device, wherein the third information includes at least one of the following: a quantity of resource elements (REs) that differ between a subcarrier actually used to measure and the target subcarrier; a quantity of symbols that differ between OFDM symbols actually used to measure and target OFDM symbols; a delay difference between a first path and a second path corresponding to the carrier phase measurement value; a spectral peak width of a first path corresponding to the carrier phase measurement value; a root-mean-square error of the carrier phase measurement value; or a variance of the carrier phase measurement value.

In some embodiments, the method further includes: receiving fourth information from the first device, wherein the fourth information includes at least one of following: a downlink reference signal time difference (DL-RSTD) and a corresponding timestamp; an uplink relative time of arrival (UL-RTOA) and a corresponding timestamp; an uplink angle of arrival (UL-AOA) and a corresponding timestamp; a time difference between receiving and transmitting of the first device and a corresponding timestamp; an uplink reference signal receiving power (UL-RSRP) and a corresponding timestamp; a downlink reference signal receiving power (DL-RSRP) and a corresponding timestamp; an uplink reference signal receiving path power (UL-RSRPP) and a corresponding timestamp; or a downlink reference signal receiving path power (DL-RSRPP) and a corresponding timestamp; wherein a granularity of the timestamp is an OFDM symbol.

In some embodiments, a range of the carrier phase measurement value is: $0 \leq$ the carrier phase measurement value $< a \times \pi \times C_1$; a is a positive integer; $C_1$ is granularity, and a unit of $C_1$ is radian; or $0 \leq$ the carrier phase measurement value $< 2^b \times C_2$; b is a positive integer; $C_2$ is granularity, and a unit of $C_2$ is meter.

According to a third aspect, a first device is provided in some embodiments of the present disclosure to address the above technical problem. The first device includes a transceiver, a memory, a processor, and a computer program stored on the memory and executable on the processor, wherein the processor is configured to read the computer program in a memory and perform the following processes: receiving first information from a Location Management Function (LMF) entity, wherein the first information is configured to instruct the first device to report a carrier phase measurement value of a target subcarrier; obtaining the carrier phase measurement value of the target subcarrier; and sending the carrier phase measurement value to the LMF entity.

In some embodiments, the first information includes at least one of following: a frequency corresponding to the target subcarrier; an identifier (ID) of the target subcarrier; an index of a carrier set corresponding to the target subcarrier; a physical resource block (PRB) index corresponding to the target subcarrier; a PRB set index corresponding to the target subcarrier; a positioning frequency layer index value corresponding to the target subcarrier; or an index value of a component carrier (CC) corresponding to the target subcarrier.

In some embodiments, the processor is further configured to read a computer program in the memory to perform the following process: receiving second information from the LMF entity, wherein the second information is configured to instruct the first device to report an instantaneous carrier phase measurement value of the target subcarrier, or the second information is configured to indicate the first device to report an accumulated carrier phase measurement value of the target subcarrier.

In some embodiments, in a case that each carrier phase measurement value corresponds to an Orthogonal Frequency Division Multiplexing (OFDM) symbol, the processor is further configured to read a program in the memory to perform the following processes: sending at least one of following carrier phase measurement values of the target subcarrier to the LMF entity: an instantaneous carrier phase measurement value corresponding to each OFDM symbol; an accumulated phase measurement value corresponding to each OFDM symbol; an instantaneous carrier phase measurement value corresponding to each OFDM symbol and a corresponding timestamp; or an accumulated phase measurement value corresponding to each OFDM symbol and a corresponding timestamp; wherein a granularity of the timestamp is an OFDM symbol.

In some embodiments, in a case that each carrier phase measurement value corresponds to one resource block, the processor is further configured to read a program in the memory to perform the following processes: sending at least one of following carrier phase measurement values of the target subcarrier to the LMF entity: an instantaneous carrier phase measurement value corresponding to each resource block; an accumulated phase measurement value corresponding to each resource block; a timestamp corresponding to the instantaneous carrier phase measurement value; or a timestamp corresponding to the accumulated phase measurement value; wherein a granularity of the timestamp is an OFDM symbol or a resource block.

In some embodiments, the carrier phase measurement value includes at least one of following measurement values: an absolute phase of arrival (POA); or a phase difference between the absolute POA and a reference POA.

In some embodiments, the absolute phase of arrival (POA) includes at least one of the following: POA of the first device relative to a second device on a target path; POA of the first device relative to a second device on a target antenna; POA of the first device relative to the second device on a target frequency layer; POA of the first device relative to a second device on a target OFDM symbol; POA of the first device relative to a second device on a target resource; or POA of the first device relative to a second device on a target subcarrier; wherein the first device is a receiving end and the second device is a transmitting end.

In some embodiments, a phase difference between the absolute POA and the reference POA includes at least one of following: a difference between the POA of the first device relative to the second device on the target path and a POA on a reference path; a difference between the POA of the first device relative to the second device on the target antenna and a POA on a reference antenna; a difference between the POA of the first device relative to the second device on the target frequency layer and a POA on a reference frequency layer; a difference between the POA of the first device relative to the second device on the target OFDM symbol and a POA on a reference OFDM symbol; a difference between the POA of the first device relative to the second device on the target resource and a POA on a reference resource; or a difference between the POA of the first device relative to the second device on the target subcarrier and a POA on a reference subcarrier; wherein the first device is a receiving end and the second device is a transmitting end.

In some embodiments, the processor is further configured to read a program in the memory to perform the following process: sending third information to the LMF, wherein the third information includes at least one of the following: a quantity of resource elements (REs) that differ between a subcarrier actually used to measure and the target subcarrier; a quantity of symbols that differ between OFDM symbols actually used to measure and target OFDM symbols; a delay difference between a first path and a second path corresponding to the carrier phase measurement value; a spectral peak width of a first path corresponding to the carrier phase measurement value; a root-mean-square error of the carrier phase measurement value; or a variance of the carrier phase measurement value.

In some embodiments, the processor is further configured to read a program in the memory to perform the following process: sending fourth information to the LMF, wherein the fourth information includes at least one of following: a downlink reference signal time difference (DL-RSTD) and a corresponding timestamp; an uplink relative time of arrival (UL-RTOA) and a corresponding timestamp; an uplink angle of arrival (UL-AOA) and a corresponding timestamp; a time difference between receiving and transmitting of the first device and a corresponding timestamp; an uplink reference signal receiving power (UL-RSRP) and a corresponding timestamp; a downlink reference signal receiving power (DL-RSRP) and a corresponding timestamp; an uplink reference signal receiving path power (UL-RSRPP) and a corresponding timestamp; or a downlink reference signal receiving path power (DL-RSRPP) and a corresponding timestamp; wherein a granularity of the timestamp is an OFDM symbol.

In some embodiments, a range of the carrier phase measurement value is: $0 \leq$ the carrier phase measurement value $< a \times \pi \times C_1$; $a$ is a positive integer; $C_1$ is granularity, and a unit of $C_1$ is radian; or $0 \leq$ the carrier phase measurement value $< 2^b \times C_2$; $b$ is a positive integer; $C_2$ is granularity, and a unit of $C_2$ is meter.

According to a fourth aspect, an LMF entity is provided to address the above technical problem. The LMF entity includes a transceiver, a memory, a processor, and a computer program stored on the memory and executable on the processor, wherein the processor is configured to read a program in a memory and perform the following processes: sending first information to a first device, wherein the first information is configured to instruct the first device to report a carrier phase measurement value of a target subcarrier; receiving the carrier phase measurement value from the first device.

In some embodiments, the first information includes at least one of following: a frequency corresponding to the target subcarrier; an identifier (ID) of the target subcarrier; an index of a carrier set corresponding to the target subcarrier; a physical resource block (PRB) index corresponding to the target subcarrier; a PRB set index corresponding to the target subcarrier; a positioning frequency layer index value corresponding to the target subcarrier; or an index value of a component carrier (CC) corresponding to the target subcarrier.

In some embodiments, the processor is further configured to read a program in the memory to perform the following process: sending second information to the first device, wherein the second information is configured to instruct the first device to report an instantaneous carrier phase measurement value of the target subcarrier, or the second information is configured to indicate the first device to report an accumulated carrier phase measurement value of the target subcarrier.

In some embodiments, in a case that each carrier phase measurement value corresponds to an Orthogonal Frequency Division Multiplexing (OFDM) symbol, the processor is further configured to read a program in the memory to perform the following processes: receiving at least one of following carrier phase measurement values of the target subcarrier from the first device: an instantaneous carrier phase measurement value corresponding to each OFDM symbol; an accumulated phase measurement value corresponding to each OFDM symbol; an instantaneous carrier phase measurement value corresponding to each OFDM symbol and a symbol-level timestamp; or an accumulated phase measurement value corresponding to each OFDM symbol and a symbol-level timestamp; wherein a granularity of the timestamp is an OFDM symbol.

In some embodiments, the processor is further configured to read a program in the memory to perform the following processes: receiving from the first device at least one of following carrier phase measurement values of the target subcarrier: an instantaneous carrier phase measurement value corresponding to each resource block; an accumulated phase measurement value corresponding to each resource block; a timestamp corresponding to the instantaneous carrier phase measurement value; or a timestamp corresponding to the accumulated phase measurement value; wherein a granularity of the timestamp is an OFDM symbol or a resource block.

In some embodiments, the carrier phase measurement value includes at least one of following measurement values: an absolute phase of arrival (POA); or a phase difference between the absolute POA and a reference POA.

In some embodiments, the absolute phase of arrival (POA) includes at least one of the following: POA of the first device relative to a second device on a target path; POA of the first device relative to a second device on a target antenna; POA of the first device relative to the second device on a target frequency layer; POA of the first device relative to a second device on a target OFDM symbol; POA of the first device relative to a second device on a target resource; or POA of the first device relative to a second device on a target subcarrier; wherein the first device is a receiving end and the second device is a transmitting end.

In some embodiments, a phase difference between the absolute POA and the reference POA includes at least one of following: a difference between the POA of the first device relative to the second device on the target path and a POA on a reference path; a difference between the POA of the first device relative to the second device on the target antenna and a POA on a reference antenna; a difference between the POA of the first device relative to the second device on the target frequency layer and a POA on a reference frequency layer; a difference between the POA of the first device relative to the second device on the target OFDM symbol and a POA on a reference OFDM symbol; a difference between the POA of the first device relative to the second device on the target resource and a POA on a reference resource; or a difference between the POA of the first device relative to the second device on the target subcarrier and a POA on a reference subcarrier; wherein the first device is a receiving end and the second device is a transmitting end.

In some embodiments, the processor is further configured to read a program in the memory to perform the following process: receiving third information from the first device, wherein the third information includes at least one of the following: a quantity of resource elements (REs) that differ between a subcarrier actually used to measure and the target subcarrier; a quantity of symbols that differ between OFDM symbols actually used to measure and target OFDM symbols; a delay difference between a first path and a second path corresponding to the carrier phase measurement value; a spectral peak width of a first path corresponding to the carrier phase measurement value; a root-mean-square error of the carrier phase measurement value; or a variance of the carrier phase measurement value.

In some embodiments, the processor is further configured to read a program in the memory to perform the following process: receiving fourth information from the first device, wherein the fourth information includes at least one of following: a downlink reference signal time difference (DL-RSTD) and a corresponding timestamp; an uplink relative time of arrival (UL-RTOA) and a corresponding timestamp; an uplink angle of arrival (UL-AOA) and a corresponding timestamp; a time difference between receiving and transmitting of the first device and a corresponding timestamp; an uplink reference signal receiving power (UL-RSRP) and a corresponding timestamp; a downlink reference signal receiving power (DL-RSRP) and a corresponding timestamp; an uplink reference signal receiving path power (UL-RSRPP) and a corresponding timestamp; or a downlink reference signal receiving path power (DL-RSRPP) and a corresponding timestamp; wherein a granularity of the timestamp is an OFDM symbol.

In some embodiments, a range of the carrier phase measurement value is: $0 \leq$ the carrier phase measurement value $< a \times \pi \times C_1$; a is a positive integer; $C_1$ is granularity, and a unit of $C_1$ is radian; or $0 \leq$ the carrier phase measurement value $< 2^b \times C_2$; b is a positive integer; $C_2$ is granularity, and a unit of $C_2$ is meter.

According to a fifth aspect, an apparatus of obtaining a carrier phase measurement value, applied to a first device, is provided to address the above technical problem. The apparatus includes: a receiving module, configured to receive first information from a Location Management Function (LMF) entity, wherein the first information is configured to instruct the first device to report a carrier phase measurement value of a target subcarrier; an obtaining module, configured to obtain the carrier phase measurement value of the target subcarrier; and a sending module, configured to send the carrier phase measurement value to the LMF entity.

According to a sixth aspect, an apparatus of obtaining a carrier phase measurement value, applied to an LMF entity, is provided to address the above technical problem. The apparatus includes: a fourth sending module, configured to send first information to a first device, wherein the first information is configured to instruct the first device to report a carrier phase measurement value of a target subcarrier; a third receiving module, configured to receive the carrier phase measurement value from the first device.

According to a seventh aspect, a processor-readable storage medium, storing a computer program, is provided to address the above technical problem. The computer program, when executed by a processor, causes the processor to perform the method of obtaining the carrier phase measurement value according to the first aspect or perform the method of obtaining the carrier phase measurement value according to the second aspect.

The above technical solution of the present disclosure has the following beneficial effects.

In the foregoing solution, the first device receives the first information from the location management function LMF entity, where the first information is configured to indicate the first device to report the carrier phase measurement value of the target subcarrier; obtain the carrier phase measurement value of the target subcarrier according to the first information; and further send the carrier phase measurement value to the LMF entity. According to this solution, the first device can report the carrier phase measurement value of the target subcarrier to the LMF.

**BRIEF DESCRIPTION OF THE DRAWINGS**

FIG. 1 is a first schematic flowchart of a method of obtaining the carrier phase measurement value according to an embodiment of the present disclosure;

FIG. 2 is a schematic diagram of a difference between an instantaneous carrier phase measurement value and an accumulated carrier phase measurement value;

FIG. 3 is a schematic diagram of a resource structure of a positioning reference signal using an interleaved pattern;

FIG. 4 is a schematic diagram of a power delay spectrum;

FIG. 5 is a second schematic flowchart of a method of obtaining the carrier phase measurement value according to an embodiment of the present disclosure;

FIG. 6 is a first schematic diagram of a time-frequency pattern according to an embodiment of the present disclosure;

FIG. 7 is a second schematic diagram of a time-frequency pattern according to an embodiment of the present disclosure;

FIG. 8 is a first structural block diagram of an apparatus of acquiring a carrier phase measurement value according to an embodiment of the present disclosure;

FIG. 9 is a second structural block diagram of an apparatus of acquiring a carrier phase measurement value according to an embodiment of the present disclosure;

FIG. 10 is a schematic diagram of a hardware structure of a first device according to an embodiment of the present disclosure;

FIG. 11 is a schematic diagram of a hardware structure of an LMF entity according to an embodiment of the present disclosure.

**DETAILED DESCRIPTION**

The technical solutions in the embodiments of the present disclosure will be clearly and completely described below with reference to the accompanying drawings in the embodiments of the present disclosure. All other embodiments obtained by a person of ordinary skill in the art based on the embodiments of the present disclosure without creative efforts shall fall within the protection scope of the present disclosure.

In the embodiments of the present disclosure, the term "and/or" describes an association relationship between associated objects, indicating that there may be three relationships, for example, A and/or B may indicate that A exists alone, A and B exist at the same time, and B exists alone. The character "/" generally indicates an "or" relationship between the associated objects.

In the embodiments of the present disclosure, the term "a plurality of" means two or more, and other quantifiers are similar.

The terminal device in the embodiments of the present disclosure may be a device that provides voice and/or data connectivity to a user, a handheld device having a wireless connection function, or another processing device connected to a wireless modem. In different systems, the name of the terminal device may be different, for example, in a 5G system, the terminal device may be referred to as user equipment (UE). The wireless terminal device may communicate with one or more core networks (CN) via a radio access network (RAN), and the wireless terminal device may be a mobile terminal device, such as a mobile phone (or referred to as a "cellular" phone) and a computer having a mobile terminal device, for example, may be a portable, pocket-sized, handheld, computer built-in or vehicle-mounted mobile device, which exchanges language and/or data with a radio access network. For example, devices such as a Personal Communication Service (PCS) phone, a cordless phone, a Session Initiated Protocol (SIP) phone, a Wireless Local Loop (WLL) station, and a personal digital assistant (PDA). The wireless terminal device may also be referred to as a system, a subscriber unit, a subscriber station, a mobile station, a mobile station, a remote station, an access point, a remote terminal, an access terminal, a user terminal, a user agent, and a user device, which are not limited in the embodiments of the present disclosure.

The network device in this embodiment of the present disclosure may be a base station, and the base station may include a plurality of cells that provide a service for the terminal. Depending on the specific application scenario, the base station may also be referred to as an access point, or may be a device in the access network that communicates with the wireless terminal device through one or more sectors on the air interface, or another name. The network device may be configured to replace the received over-the-air frame with an Internet Protocol (IP) packet as a router between the wireless terminal device and the rest of the access network, where the rest of the access network may include an Internet Protocol (IP) communication network. The network device may also coordinate attribute management of the air interface. For example, the network device in the embodiments of the present disclosure may be a network device (a Base Transceiver Station, BTS) in a Global System for Mobile Communications (GSM) or a Code Division Multiple Access (Code Division Multiple Access, CDMA), or may be a Node B in a Wide-band Code Division Multiple Access (WCDMA), or an evolutional Node B, eNB or e-NodeB in a Long Term Evolution (LTE) system, a 5G base station (gNB) in a 5G network architecture (next generation system), or a Home evolved NodeB (HeNB), a relay node, a home base station (Femto), a pico base station (Pico), or the like, which is not limited in the embodiments of the present disclosure. In some network structures, the network device may include a centralized unit (CU) node and a distributed unit (DU) node, and the centralized unit and the distribution unit may also be geographically separated.

The network device and the terminal device may each perform multi-input multi-output (MIMO) transmission by using one or more antennas, and the MIMO transmission may be single user MIMO (SU-MIMO) or multi-user MIMO (multiple user MIMO, MU-MIMO). According to the form and quantity of the root antenna combination, the MIMO transmission may be 2D-MIMO, 3D-MIMO, FD-MIMO or massive-MIMO, or may be diversity transmission, precoding transmission, beamforming transmission, or the like.

The following first describes the content involved in the solutions provided in the embodiments of the present disclosure.

In NR cellular positioning, a pseudo code different from GNSS positioning is modulated on a carrier frequency signal, and an NR positioning signal is an OFDM signal. In consideration of the time offset $\Delta t$ and the frequency offset $\Delta f$ between the transceivers, the frequency-domain reception data $R_k^m$ of the k-th subcarrier of the m-th OFDM symbol in one slot may be expressed in the following form:

$$R_k^m = \left( \frac{\sin(\pi\delta f)}{N \sin\left(\frac{\pi\delta f}{N}\right)} e^{j2\pi \sum_{i=0}^{m-1}(N+N_g^i)\delta f/N} e^{\frac{j\pi\delta f(N-1)}{N}} \right)$$

$$\cdot e^{-j2\pi(f_c+k\Delta f_{SCS})\Delta t} \cdot H_k^m X_k^m + W_k^m$$

wherein, $X_k^m$ is a transmitting symbol of the k-th subcarrier corresponding to the m-th OFDM symbol, $\delta f$ is a normalized frequency offset, i.e., $\delta f = \Delta f / \Delta f_{SCS}$, $\Delta f_{SCS}$ is a subcarrier spacing, $H_k^m$ is a Channel Frequency Response (CFR) of the k-th subcarrier corresponding to the m-th OFDM symbol, $W_k^m$ is noise.

Specifically, in case of multi-path, the channel frequency response may be expressed as follow:

$$H_k^m = \sum_{i=0}^{L-1} h_i e^{-j2\pi(f_c+k\Delta f_{SCS})\tau_i} e^{-j\phi_0} \ ;$$

wherein, L is the quantity of paths, $h_i$ and $\tau_i$ is the attenuation and the propagation delay corresponding to the i-th path, $\phi_0$ is an initial phase of the beginning in one slot.

Therefore, the CFR for each path can be expressed as follow:

$$H_{k,l}^m = h_l e^{-j2\pi(f_c+k\Delta f_{SCS})\tau_l} e^{-j\phi_0} \ ;$$

the phase of $H_{k,l}^m$ can be expressed as follow:

$$\angle H_{k,l}^m = mod(\pi\delta f(t)(2\sum_{n=0}^{m-1}(N+N_g^n)/N+1-1/N) - 2\pi(f_c +$$
$$k\,\Delta f_{SCS})\Delta t(t) + \tau_l(t)) - \phi_0), \ 2\pi) \ ;$$

wherein, $\tau_l$ is the propagation delay of the first path; $f_c + k\Delta f_{SCS}$ is the carrier frequency; m is the OFDM symbol; $\delta f$ is the frequency offset; $\Delta t$ is the time offset; $\phi_0$ is the initial phase.

The following introduces a method and an apparatus for obtaining carrier phase measurement values, a first device and an LMF entity provided by the present disclosure.

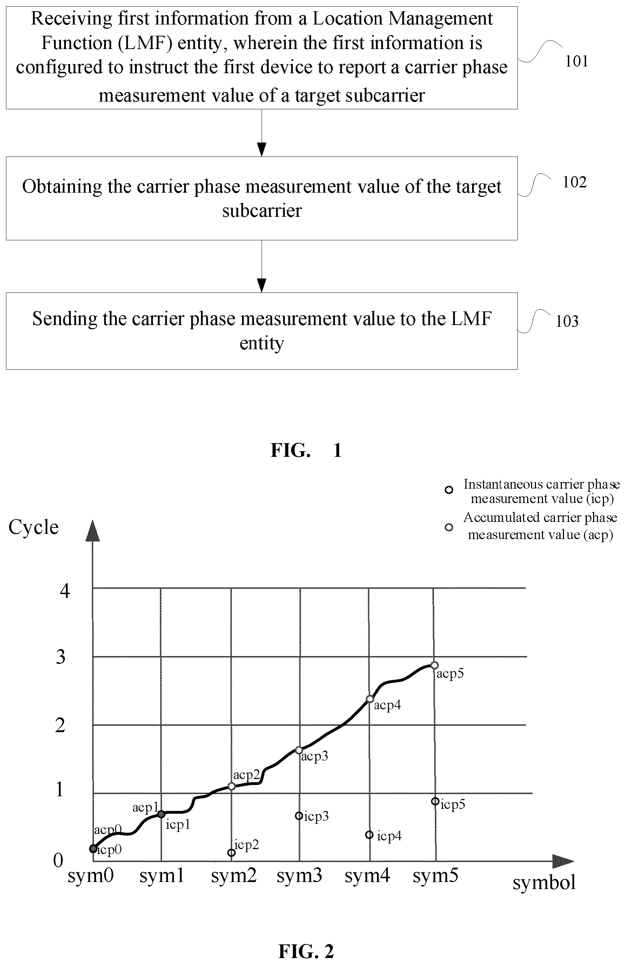

Referring to FIG. 1, an embodiment of the present disclosure provides a method of obtaining a carrier phase measurement value, which is applied to a first device. In some embodiments, the first device may include at least one of the following: a base station, a terminal, and a PRU. Specifically, the method includes the following steps.

Step 101: receiving first information from a Location Management Function (LMF) entity, wherein the first information is configured to instruct the first device to report a carrier phase measurement value of a target subcarrier.

It should be noted that the target subcarrier includes at least one subcarrier.

During specific implementation, the first information carries the identification information of the target subcarrier, so that the first device obtains the carrier phase measurement value of the target subcarrier according to the identification information of the target subcarrier indicated in the first information and reports the carrier phase measurement value to the LMF entity.

The first information includes at least one of following: a frequency corresponding to the target subcarrier; an identifier (ID) of the target subcarrier; an index of a carrier set corresponding to the target subcarrier; a physical resource block (PRB) index corresponding to the target subcarrier; a PRB set index corresponding to the target subcarrier; a positioning frequency layer index value corresponding to the target subcarrier; or an index value of a component carrier (CC) corresponding to the target subcarrier.

Exemplarily, the first information includes subcarrier frequencies f1, f2, and f3; wherein, each subcarrier frequency corresponds to a target subcarrier.

For example, the first information includes a subcarrier ID of k1, k2, and k3, where each subcarrier ID corresponds to one target subcarrier.

For example, the first information includes an offset between Point A and a target subcarrier, for example, o1, o2, and o3.

For example, the first information includes: an offset between a bandwidth part (BWP) ID and a target subcarrier.

For example, the first information includes a carrier frequency fc and an ID of a target subcarrier.

Step 102: obtaining the carrier phase measurement value of the target subcarrier;

In this step, the first device determines the target subcarrier according to the first information from the LMF, and obtains the carrier phase measurement value of the target subcarrier by receiving the measurement signal from the second device.

During specific implementation, after receiving the first information from the LMF entity, the first device may determine, based on the identification information of the target subcarrier (for example, the frequency and the ID of the target subcarrier) carried in the first information, the target subcarrier of which the carrier phase measurement value is to be obtained.

For example, when the first device is a Base Station (BS), the base station receives a Sounding Reference Signal (SRS) from the terminal and the PRU, and obtains a carrier phase measurement value of the target subcarrier according to the SRS.

For example, when the first device is a terminal, the terminal receives a positioning reference signal (PRS) from the base station, and obtains a carrier phase measurement value of the target subcarrier according to the PRS.

It should be noted that when the first device does not receive the positioning reference signal on the target subcarrier, the carrier phase measurement value of the measurement subcarrier needs to be obtained according to the positioning reference signal on the measurement subcarrier received by the first device, and the carrier phase measurement value of the target subcarrier is further obtained by compensating the phase difference of the measurement subcarrier relative to the target subcarrier.

It should be noted that, if a slope compensation manner is used to obtain the phase of the unknown adjacent subcarrier, that is, after obtaining the carrier phase measurement value of the measurement subcarrier, and if the carrier phase measurement value of the target subcarrier adjacent to the measurement subcarrier is obtained based on the slope compensation, the error source is mainly the estimation error of the slope of the frequency-domain phase, that is, the larger the interval between the measurement subcarrier and the target subcarrier, the greater the error. Therefore, the interval between the measurement subcarrier and the target subcarrier needs to be controlled.

Specifically, if the carrier phase phi_r1 of the sub-carrier r1 is known, and the carrier phase phi_r2 of the sub-carrier r2 needs to be obtained, then the carrier phase phi_r2 of the sub-carrier r2 may be calculated according to the following formula: phi_r2 = phi_r1 + tao_1st_path*RE_shift, where tao_1st_path is the slope corresponding to the first path in the phase frequency spectrum corresponding to the first path, and the physical meaning thereof is the propagation delay of the first path; RE_shift is the number of REs between the subcarrier r2 and the subcarrier r1, and REshift can reflect the index of the value of the measurement value error.

Step 103: sending the carrier phase measurement value to the LMF entity.

In the foregoing embodiment, the first device can obtain the carrier phase measurement value of the target subcarrier based on the first information obtained from the LMF entity and used to instruct the first device to report the carrier phase measurement value of the target subcarrier, and report the carrier phase measurement value to the LMF entity. In this way, the carrier phase measurement value can be reported to the LMF entity in the NR system.

In an optional embodiment, the method further includes: receiving second information from the LMF entity, wherein the second information is configured to instruct the first device to report an instantaneous carrier phase measurement value of the target subcarrier, or the second information is configured to indicate the first device to report an accumulated carrier phase measurement value of the target subcarrier.

For example, one instantaneous carrier phase measurement value of the target subcarrier may be reported on each OFDM symbol, or one instantaneous carrier phase measurement value of the target subcarrier may be reported on each resource block. For another example, one accumulated carrier phase measurement value of the target subcarrier may be reported on each OFDM symbol, or one accumulated carrier phase measurement value of the target subcarrier may be reported on each resource block.

Specifically, the instantaneous phase: $\varphi_p = \varphi_p$, the accumulated phase:

$$\varphi_p = \varphi_{m0} + \sum_{i=m0}^{p}(\varphi_i - \varphi_{i-1})$$; where $p$ represents the current symbol index, and m0 represents the accumulated starting symbol index. During specific implementation, the start indexes of the UE and the PRU may be the same or different, but the reference time (absolute time) needs to be the same.

For example, the difference between the instantaneous carrier phase measurement value ICP and the accumulated carrier phase measurement value ACP on each symbol is shown in FIG. 2. In FIG. 2, the white dots represent ACP, and the black dots represent ICP.

During specific implementation, the value range of the ICP is $0 \le \varphi_p < 2^B \times h$, where B is a positive integer; h is the granularity, and its unit is meter (m). The value range of the ACP is $0 \le \varphi_p < A \times pi \times g$, where A is a positive integer; g is the granularity, and the unit is the radian (rad).

In addition, during specific implementation, ICP and ACP on each subcarrier of each symbol may also bind a timestamp and reliability information of a resource level, where the timestamp is used to indicate the time of the resource block or the time of a symbol of the resource block, to indicate an absolute measurement moment of the current carrier phase measurement value.

The following describes a reporting manner of a carrier phase measurement value.

Manner 1

In an embodiment of the present disclosure, in a case that each carrier phase measurement value corresponds to one OFDM symbol, in step 103, the sending the carrier phase measurement value to the LMF entity includes: sending at least one of following carrier phase measurement values of the target subcarrier to the LMF entity: an instantaneous carrier phase measurement value corresponding to each OFDM symbol; an accumulated phase measurement value corresponding to each OFDM symbol; an instantaneous carrier phase measurement value corresponding to each OFDM symbol and a corresponding timestamp; or an accumulated phase measurement value corresponding to each OFDM symbol and a corresponding timestamp; wherein a granularity of the timestamp is an OFDM symbol.

It should be noted that the same symbol may correspondingly be used to obtain multiple carrier phase measurement values of different frequencies.

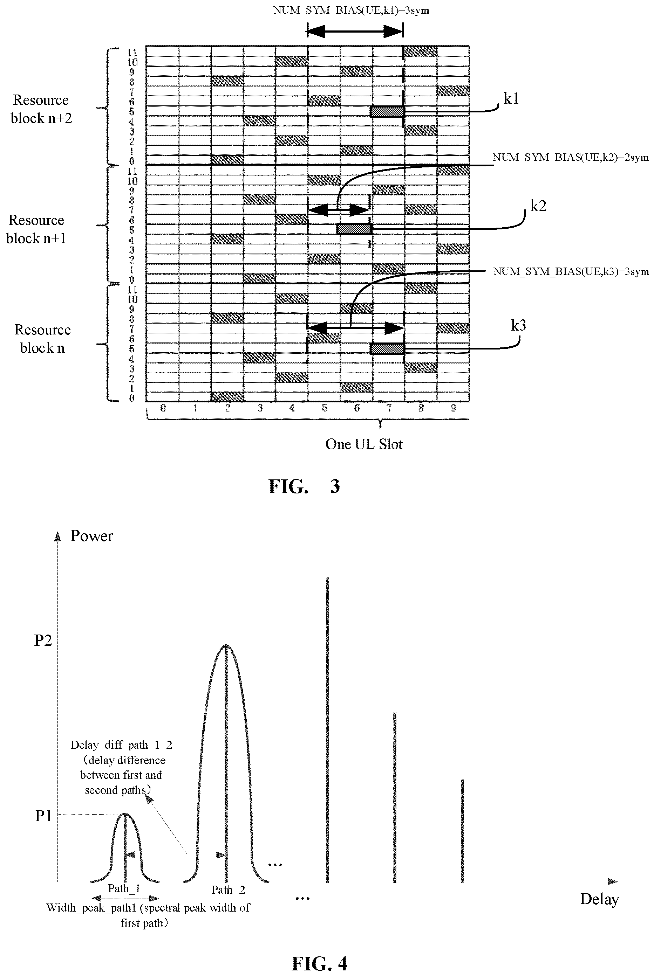

For example, in a time-frequency pattern (pattern) of the SRS shown in FIG. 3, subcarriers on the second to ninth OFDM symbols are distributed in a staggered manner.

Based on the pattern example shown in FIG. 3, the carrier phase measurement value of the measurement subcarrier may be obtained by measuring the measurement subcarrier on each OFDM symbol; further, the carrier phase measurement value of the measurement subcarrier is compensated according to the RE offset between the measurement subcarrier and the target subcarrier, to obtain the carrier phase measurement value of the target subcarrier.

For example, the carrier phase measurement value corresponding to the target subcarrier k1 may be obtained based on the measurement subcarrier g1 on the second OFDM symbol; the carrier phase measurement value corresponding to the target subcarrier k2 may be obtained based on the measurement subcarrier g2 on the second OFDM symbol; and the carrier phase measurement value corresponding to the target subcarrier k3 may be obtained based on the measurement subcarrier g3 on the second OFDM symbol.

For another example, the carrier phase measurement value corresponding to the target subcarrier k1 may be obtained based on the measurement subcarrier h1 on the third OFDM symbol; the carrier phase measurement value corresponding to the target subcarrier k2 may be obtained based on the measurement subcarrier h2 on the third OFDM symbol; and the carrier phase measurement value corresponding to the target subcarrier k3 may be obtained based on the measurement subcarrier h3 on the third OFDM symbol. Here, the fourth to ninth OFDM symbols may be deduced by analogy.

It should be appreciated that the instantaneous carrier phase measurement value is also referred to as a fractional carrier phase measurement value.

It should be noted that the form of reporting the carrier phase measurement value of the target subcarrier by the first device includes:

form 1: for each OFDM symbol, reporting the instantaneous carrier phase measurement value obtained on the current OFDM symbol, that is, reporting the instantaneous carrier phase measurement value of the at least one target subcarrier for each OFDM symbol;

for example, POA1(BS_index, UE_index, OFDM_index1,RE_index);
for example, POA2(BS_index,UE_index,OFDM_index2, RE_index);

form 2: for the first OFDM symbol, reporting the instantaneous carrier phase measurement value obtained on the current symbol; for the second to N-th OFDM symbols, reporting the accumulated carrier phase measurement values, and N is a positive integer;

for example, POA1(BS_index, UE_index, OFDM_index1, RE_index);
for example, Delta_POA2(BS_index, UE_index, OFDM_index2, RE_index); form 3: for each OFDM symbol, reporting the instantaneous carrier phase measurement value obtained on the current OFDM symbol and the corresponding symbol-level timestamp;
for example, POA1(BS_index, UE_index, OFDM_index1,RE_index,time stamp);
for example, POA2(BS_index,UE_index,OFDM_index2, RE_index,time stamp); form 4: for the first OFDM symbol, reporting the instantaneous carrier phase measurement value obtained on the current symbol and the corresponding symbol-level timestamp; for the second to N-th OFDM symbols, reporting the accumulated carrier phase measurement value and the symbol-level timestamp; and N is a positive integer;
for example, POA1(BS_index, UE_index, OFDM_index1, RE_index,time stamp);
for example, Delta_POA2(BS_index, UE_index, OFDM_index2, RE_index,time stamp).

In the foregoing embodiment, after receiving the first information from the LMF, the first device obtains the carrier phase measurement value of the target subcarrier based on each OFDM symbol. During reporting, the carrier phase measurement value of the target subcarrier may be reported for each symbol, or for the first OFDM symbol, the instantaneous carrier phase measurement value obtained on the current symbol may be reported, and for the second to N-th OFDM symbols, the accumulated phase values may be reported.

Manner 2

In an embodiment of the present disclosure, in a case that each carrier phase measurement value corresponds to one resource block, in step 103, the sending the carrier phase measurement value to the LMF entity includes: sending at least one of following carrier phase measurement values of the target subcarrier to the LMF entity: an instantaneous carrier phase measurement value corresponding to each resource block; an accumulated phase measurement value corresponding to each resource block; a timestamp corresponding to the instantaneous carrier phase measurement value; or a timestamp corresponding to the accumulated phase measurement value; wherein a granularity of the timestamp is an OFDM symbol or a resource block.

It should be noted that the same resource block may correspondingly obtain multiple carrier phase measurement values of different frequencies.

Specifically, in an application scenario for positioning, the resource block may refer to an SRS resource or a PRS resource.

For example, in a time-frequency pattern (pattern) of the SRS shown in FIG. 3, subcarriers on the second to ninth OFDM symbols are distributed in a staggered manner. Based on the pattern example shown in FIG. 3, the second to ninth OFDM symbols are combined to obtain a complete set of data with a comb of 1, and finally, for the resource, the carrier phase measurement value of the required target subcarrier is reported, that is, for one resource block the phase carrier phase measurement value of the target subcarrier needs to be reported only once. For example, POA (BS_index, UE_index, resource_index, RE_index).

It should be appreciated that the instantaneous carrier phase measurement values are also referred to as fractional carrier phase measurement values.

It should be noted that the form of reporting the carrier phase measurement value of the target subcarrier by the first device includes:

form 1: for each resource block, reporting the carrier phase measurement value obtained on the current resource block, that is, reporting the instantaneous carrier phase measurement value of the at least one target subcarrier for each resource block;

form 2: for he first resource block, reporting the instantaneous carrier phase measurement value obtained on the current symbol, and for the second to M-th resource blocks, reporting the accumulated carrier phase measurement values;

form 3: for each resource block, reporting the instantaneous carrier phase measurement value obtained on the current resource block and the corresponding symbol-level timestamp or resource-level timestamp;

form 4: for he first resource block, reporting the instantaneous carrier phase measurement value obtained on the current symbol and the corresponding symbol-level timestamp or the resource-level timestamp; for the second to M-th resource blocks, reporting the accumulated carrier phase measurement value and the symbol-level timestamp or the resource-level timestamp; and M is a positive integer.

In the foregoing embodiment, after receiving the first information from the LMF, the first device obtains the carrier phase measurement value of the target subcarrier based on each resource block. During reporting, the instantaneous carrier phase measurement value of the target subcarrier may be reported for each resource block, or for the first resource block, the instantaneous carrier phase measurement value obtained on the current symbol may be reported, and for the second to M-th resource blocks, the accumulated carrier phase measurement values are reported.

The following describes the definition of the carrier phase measurement value.

In an embodiment of the present disclosure, the carrier phase measurement value includes at least one of the following measurement values: an absolute phase of arrival (POA); or a phase difference between the absolute POA and a reference POA.

In an exemplary scenario, if four carrier phase measurement values of the target subcarrier k1 are obtained: $\varphi 1$, $\varphi 2$, $\varphi_3$, $\varphi 4$. Reporting the absolute POA refers to direct reporting of $\varphi 1$, $\varphi 2$, $\varphi_3$, $\varphi 4$. Reporting the phase difference between the absolute POA and the reference POA refers to reporting $\varphi 1 - \varphi_r$, $\varphi 2 - \varphi r$, $\varphi 3 - \varphi r$, $\varphi 4 - \varphi r$, wherein $\varphi r$ is reference POA.

For example, for downlink, $\varphi 2 - \varphi r$ is the difference between the serving cell and the reference cell, i.e., $\varphi r$ is a carrier phase measurement value (ACP) of the reference cell by the UE, $\varphi 2$ is the carrier phase measurement value (ACP) of the serving cell.

In an implementation, in an application scenario in which multipath transmission exists, for the first path, the absolute POA corresponding to the first path may be directly reported; for the path other than the first path, the phase difference between the absolute POA and the reference POA corresponding to the path other than the first path may be reported, or the phase difference between the absolute POA corresponding to the path other than the first path and the absolute POA corresponding to the first path may be reported.

In another implementation, in an application scenario in which multipath transmission exists, for the first path, the phase difference between the absolute POA corresponding to the first path and the reference PoA of the first path may be directly reported; for the path other than the first path, the phase difference between the absolute POA corresponding to the path other than the first path and the reference POA of the path other than the first path may be reported.

Specifically, the absolute phase of arrival (POA) includes at least one of the following: POA of the first device relative to a second device on a target path; POA of the first device relative to a second device on a target antenna; POA of the first device relative to the second device on a target frequency layer; POA of the first device relative to a second device on a target OFDM symbol; POA of the first device relative to a second device on a target resource; or POA of the first device relative to a second device on a target subcarrier; wherein the first device is a receiving end and the second device is a transmitting end.

For example, when the first device is a base station and the second device is a terminal and a TRP, the terminal and the TRP send uplink measurement signals to the base station, and the base station obtains absolute POA of the base station relative to the terminal and the TRP according to the uplink measurement signals.

For example, when the first devices are a terminal and a TRP, and the second device is a base station, the base station sends a downlink measurement signal to the terminal and the TRP, and the terminal and the TRP obtain the absolute POA relative to the base station according to the downlink measurement signal.

Specifically, a phase difference between the absolute POA and the reference POA includes at least one of following: a difference between the POA of the first device relative to the second device on the target path and a POA on a reference path; a difference between the POA of the first device relative to the second device on the target antenna and a POA on a reference antenna; a difference between the POA of the first device relative to the second device on the target frequency layer and a POA on a reference frequency layer; a difference between the POA of the first device relative to the second device on the target OFDM symbol and a POA on a reference OFDM symbol; a difference between the POA of the first device relative to the second device on the target resource and a POA on a reference resource; or a difference between the POA of the first device relative to the second device on the target subcarrier and a POA on a reference subcarrier; wherein the first device is a receiving end and the second device is a transmitting end.

It should be noted that, for multipath transmission, the target path may be a first path or a path other than the first path; the target resource specifically refers to a target time-frequency resource, for example, an initial measurement symbol; the reference resource specifically refers to a reference time-frequency resource, for example, a reference symbol; and the reference subcarrier may be, for example, a subcarrier with a highest frequency.

In an optional embodiment of the present disclosure, the method of obtaining the carrier phase measurement value further includes: sending third information to the LMF, wherein the third information includes at least one of the following: a quantity of resource elements (REs) that differ between a subcarrier actually used to measure and the target subcarrier; a quantity of symbols that differ between OFDM (Orthogonal frequency division multiplex) symbols actually used to measure and target OFDM symbols; a delay difference between a first path and a second path corresponding to the carrier phase measurement value; a spectral peak width of a first path corresponding to the carrier phase measurement value; a root-mean-square error of the carrier phase measurement value; or a variance of the carrier phase measurement value.

As shown in FIG. 4, the first path refers to path_1, the second path refers to path_2, there is a delay difference Delay_Diff_Path_1_2 between the first path and the second path, and the spectral peak width of the first path is Width_peak_path 1.

The target OFDM symbol refers to an OFDM symbol reported by the first device to the LMF.

For example, for the time-frequency pattern structure shown in FIG. 3, the quantity of symbols that are different between the OFDM symbols actually used for measurement and the target OFDM symbols refers to the number of SYM offsets between the measurement symbols of sym2-9 and the symbol of reporting.

In an exemplary scenario, a base station (BS) receives a UL-SRS signal from a User Equipment (UE), and obtains a carrier phase measurement value of the target subcarrier on the resource blocks (sym 2-9) according to the received UL-SRS signal. For the time-frequency pattern shown in FIG. 3, assuming that sym 4 is selected as the reporting moment representing the SRS resource, the base station is on the target subcarriers k1, k2, k3 relative to the UE, and for the phase deviation of sym4 (here, the deviation in time) is:
NUM_SYM_BIAS(UE,k1)=3 SYM, NUM_SYM_BIAS(UE,k2)=2 SYM, NUM_SYM_BIAS(UE,k3)=3 SYM.

In the foregoing embodiment, the third information can represent the reliability of the carrier phase measurement value, and by sending the third information to the LMF, the third information can reflect the reliability or the error size of each measurement value, so that the LMF can be assisted to improve the positioning precision.

In an optional embodiment of the present disclosure, the method of obtaining the carrier phase measurement value further includes: sending fourth information to the LMF, wherein the fourth information includes at least one of following: a downlink reference signal time difference (DL-RSTD) and a corresponding timestamp; an uplink relative time of arrival (UL-RTOA) and a corresponding timestamp; an uplink angle of arrival (UL-AOA) and a corresponding timestamp; a time difference between receiving and transmitting of the first device and a corresponding timestamp; an uplink reference signal receiving power (UL-RSRP) and a corresponding timestamp; a downlink reference signal receiving power (DL-RSRP) and a corresponding timestamp; an uplink reference signal receiving path power (UL-RSRPP) and a corresponding timestamp; or a downlink reference signal receiving path power (DL-RSRPP) and a corresponding timestamp; wherein a granularity of the timestamp is an OFDM symbol.

In the foregoing embodiment, the first device sends the fourth information to the LMF, reports the positioning information related to the carrier phase measurement value to the LMF, and uses the combined positioning of multiple measurement values to assist the LMF in achieving accurate positioning.

In an embodiment of the present disclosure, the range of the carrier phase measurement value is: 0≤the carrier phase measurement value<$a \times \pi \times C_1$; a is a positive integer; $C_1$ is granularity, and a unit of $C_1$ is radian; or 0≤the carrier phase measurement value <$2^b \times C_2$; b is a positive integer; $C_2$ is granularity, and a unit of $C_2$ is meter.

In the foregoing embodiment, a value range of the carrier phase measurement value is given. where 0≤the carrier phase measurement value<$a \times \pi \times C_1$; that is, [0, N*pi) with granularity rad, pi means $\pi$. 0≤the carrier phase measurement value < $2^b \times C_2$, that is, [0, 2^N) with granularity meter.

In addition, the carrier phase measurement value may also be one of the following:

the value range is 0 cycle to 1 cycle, and the granularity is 1/(2^8) cycle, that is, [0, 1) with granularity 1/(2^8) cycle 0.01 cycle;

the value range is 0-2*pi radians, and the granularity is 1/(2^8)*2 pi radians, [0, 2*pi) with granularity 1/(2^8) rad;

the value range is -pi-pi radians, and the granularity is 1/(2^8)*2pi radians, that is, [-pi, pi) with granularity 1/(2^8) rad.

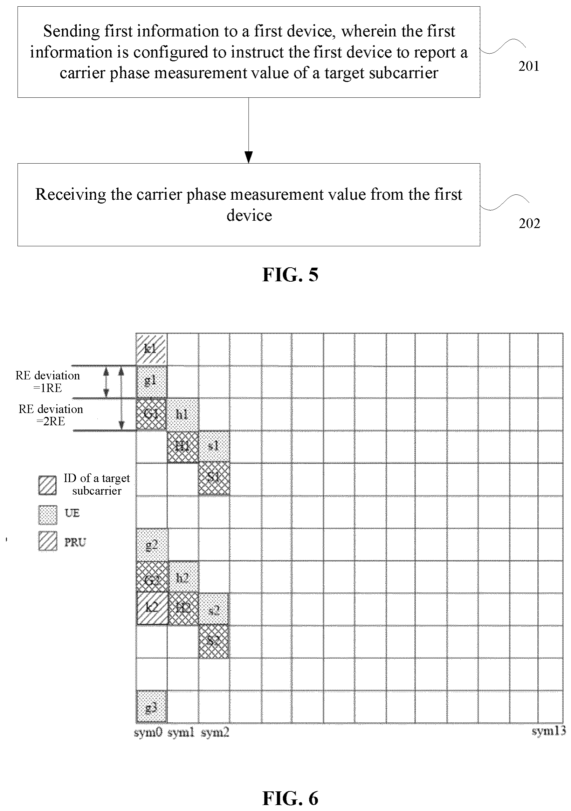

Referring to FIG. 5, an embodiment of the present disclosure provides a method of obtaining a carrier phase measurement value, which is applied to an LMF entity, and specifically includes the following steps.

Step 201: sending first information to a first device, wherein the first information is configured to instruct the first device to report a carrier phase measurement value of a target subcarrier.

Specifically, the first information includes at least one of the following:

a frequency corresponding to the target subcarrier; an identifier (ID) of the target subcarrier; an index of a carrier set corresponding to the target subcarrier; a physical resource block (PRB) index corresponding to the target subcarrier; a PRB set index corresponding to the target subcarrier; a positioning frequency layer index value corresponding to the target subcarrier; or an index value of a component carrier (CC) corresponding to the target subcarrier.

It should be noted that a manner in which the LMF entity determines the first information includes at least one of the following:

being pre-defined or configured for the LMF;

that the base station configures and sends the recommended frequency to the LMF; or

that the terminal applies for or recommends, and sends the recommended frequency to the LMF and the base station, and the LMF or the base station determines the configuration.

Exemplarily, the first information includes subcarrier frequencies f1, f2, and f3; wherein, each subcarrier frequency corresponds to a target subcarrier.

For example, the first information includes a subcarrier ID of k1, k2, and k3, where each subcarrier ID corresponds to one target subcarrier.

For example, the first information includes an offset between Point A and a target subcarrier, for example, o1, o2, and o3.

For example, the first information includes: a bandwidth part (BWP) ID and an offset of a target subcarrier.

For example, the first information includes a carrier frequency fc and an ID of a target subcarrier.

Step 202: receiving the carrier phase measurement value from the first device.

In the foregoing embodiment, the LMF obtains the carrier phase measurement value of the target subcarrier by sending the first information for instructing the first device to report the carrier phase measurement value of the target subcarrier to the first device. In this way, in the NR system, the first device reports the carrier phase measurement value to the LMF entity.

In an optional embodiment, the method further includes: sending second information to the first device, wherein the second information is configured to instruct the first device to report an instantaneous carrier phase measurement value of the target subcarrier, or the second information is configured to indicate the first device to report an accumulated carrier phase measurement value of the target subcarrier.

The following describes a manner in which the first device reports the carrier phase measurement value to the LMF.

Manner 1

In an embodiment of the present disclosure, in a case that each carrier phase measurement value corresponds to one OFDM symbol, the receiving the carrier phase measurement value from the first device includes: receiving at least one of following carrier phase measurement values of the target subcarrier from the first device: an instantaneous carrier phase measurement value corresponding to each OFDM symbol; an accumulated phase measurement value corresponding to each OFDM symbol; an instantaneous carrier phase measurement value corresponding to each OFDM symbol and a symbol-level timestamp; or an accumulated phase measurement value corresponding to each OFDM symbol and a symbol-level timestamp; wherein a granularity of the timestamp is an OFDM symbol.

It should be noted that the same symbol may correspondingly obtain multiple carrier phase measurement values of different frequencies.

For example, in a time-frequency pattern (pattern) of the SRS shown in FIG. 3, subcarriers on the second to ninth OFDM symbols are distributed in a staggered manner.

Based on the pattern example shown in FIG. 3, the carrier phase measurement value of the measurement subcarrier may be obtained by measuring the measurement subcarrier on each OFDM symbol; further, the carrier phase measurement value of the measurement subcarrier is compensated according to the RE offset between the measurement subcarrier and the target subcarrier to obtain the carrier phase measurement value of the target subcarrier. For specific examples, refer to the first device side, and details are not described herein again.

It should be noted that, for a scene of one-shot (positioning with a carrier phase measurement value of a single symbol), the instantaneous carrier phase measurement value on each symbol is recovered according to the accumulated carrier phase measurement value on each OFDM symbol, then each symbol is subjected to one position calculation, or the position calculation is directly performed according to the instantaneous carrier phase measurement value on each symbol; for a scenario of multi-shot (positioning using carrier phase measurement values of a plurality of symbols), joint processing is performed according to an accumulated carrier phase measurement value or an instantaneous carrier phase measurement value of the plurality of OFDM symbols, for example, performing joint position calculation by using an Extended Kalman Filter (EKF).

Manner 2

In an embodiment of the present disclosure, in a case that each carrier phase measurement value corresponds to one resource block, receiving the carrier phase measurement value from the first device includes receiving from the first device at least one of following carrier phase measurement values of the target subcarrier: an instantaneous carrier phase measurement value corresponding to each resource block; an accumulated phase measurement value corresponding to each resource block; a timestamp corresponding to the instantaneous carrier phase measurement value; or a timestamp corresponding to the accumulated phase measurement value; wherein a granularity of the timestamp is an OFDM symbol or a resource block.

It should be noted that the same resource block may correspondingly obtain multiple carrier phase measurement values of different frequencies.

Specifically, in an application scenario for positioning, the resource block may refer to an SRS resource or a PRS resource.

For example, in a time-frequency pattern (pattern) of the SRS shown in FIG. 3, subcarriers on the second to ninth OFDM symbols are distributed in a staggered manner. Based on the pattern example shown in FIG. 3, the second to ninth OFDM symbols are combined to obtain a complete set of data with a comb of 1, and finally, for the resource, the carrier phase measurement value of the required target subcarrier is reported, that is, for one resource block the phase carrier phase measurement value of the target subcarrier needs to be reported only once. For example, POA (BS_index, UE_index, resource_index, RE_index). Details of the example can be obtained by referring to the side of the first device, which is not further described herein.

It should be noted that, for a scene of one-shot (positioning with a carrier phase measurement value of a single symbol), the instantaneous carrier phase measurement value corresponding to each resource block is recovered according to the accumulated carrier phase measurement value on each resource block, and then position calculation is performed once for each resource block; for a scenario of multi-shot (positioning using carrier phase measurement values of a plurality of symbols), joint processing is performed according to an accumulated carrier phase measurement value or an instantaneous carrier phase measurement value of a plurality of resource blocks, for example, joint position calculation is performed by using an Extended Kalman Filter (EKF).

In an embodiment of the present disclosure, the carrier phase measurement value includes at least one of following measurement values: an absolute phase of arrival (POA); or a phase difference between the absolute POA and a reference POA.

In an implementation, in an application scenario in which multipath transmission exists, for the first path, the absolute POA corresponding to the first path may be directly reported; for the path other than the first path, the phase difference between the absolute POA and the reference POA corresponding to the path other than the first path may be reported, or the phase difference between the absolute POA corresponding to the path other than the first path and the absolute POA corresponding to the first path may be reported.

In another implementation, in an application scenario in which multipath transmission exists, for the first path, the phase difference between the absolute POA corresponding to the first path and the reference PoA of the first path may be directly reported; for the path other than the first path, the phase difference between the absolute POA corresponding to the path other than the first path and the reference POA of the path other than the first path may be reported.

Specifically, the absolute phase of arrival (POA) includes at least one of the following: POA of the first device relative to a second device on a target path; POA of the first device relative to a second device on a target antenna; POA of the first device relative to the second device on a target frequency layer; POA of the first device relative to a second device on a target OFDM symbol; POA of the first device relative to a second device on a target resource; or POA of the first device relative to a second device on a target subcarrier; wherein the first device is a receiving end and the second device is a transmitting end.

For example, when the first device is a base station and the second device is a terminal and a TRP, the terminal and the TRP send uplink measurement signals to the base station, and the base station obtains absolute POA of the base station relative to the terminal and the TRP according to the uplink measurement signals.

For example, when the first devices are a terminal and a TRP, and the second device is a base station, the base station sends a downlink measurement signal to the terminal and the TRP, and the terminal and the TRP obtain the absolute POA relative to the base station according to the downlink measurement signal.

Specifically, a phase difference between the absolute POA and the reference POA includes at least one of following: a difference between the POA of the first device relative to the second device on the target path and a POA on a reference path; a difference between the POA of the first device relative to the second device on the target path and a POA on a reference antenna; a difference between the POA of the first device relative to the second device on the target path and a POA on a reference frequency layer; a difference between the POA of the first device relative to the second device on the target path and a POA on a reference OFDM symbol; a difference between the POA of the first device relative to the second device on the target path and a POA on a reference resource; or a difference between the POA of the first device relative to the second device on the target path and a POA on a reference subcarrier; wherein the first device is a receiving end and the second device is a transmitting end.

It should be noted that, for multipath transmission, the target path may be a first path or a path other than the first path; the target resource specifically refers to a target time-frequency resource, for example, a target symbol; the reference resource specifically refers to a reference time-frequency resource, for example, a reference symbol.

In an embodiment of the present disclosure, the method further includes: receiving third information from the first device, wherein the third information includes at least one of the following: a quantity of resource elements (REs) that differ between a subcarrier actually used to measure and the target subcarrier; a quantity of symbols that differ between OFDM symbols actually used to measure and target OFDM symbols; a delay difference between a first path and a second path corresponding to the carrier phase measurement value; a spectral peak width of a first path corresponding to the carrier phase measurement value; a root-mean-square error of the carrier phase measurement value; or a variance of the carrier phase measurement value.

As shown in FIG. 4, the first path refers to path_1, the second path refers to path_2, there is a delay difference Delay_Diff_Path_1_2 between the first path and the second path, and the spectral peak width of the first path is Width_peak_path 1.

In the foregoing embodiment, the third information can represent the reliability of the carrier phase measurement value, and by sending the third information to the LMF, the third information can reflect the reliability or error size of each measurement value, so that the LMF can be assisted to improve the positioning precision.

In an embodiment of the present disclosure, the method further includes: receiving fourth information from the first device, wherein the fourth information includes at least one of following: a downlink reference signal time difference (DL-RSTD) and a corresponding timestamp; an uplink relative time of arrival (UL-RTOA) and a corresponding timestamp; an uplink angle of arrival (UL-AOA) and a corresponding timestamp; a time difference between receiving and transmitting of the first device and a corresponding timestamp; an uplink reference signal receiving power (UL-RSRP) and a corresponding timestamp; a downlink reference signal receiving power (DL-RSRP) and a corresponding timestamp; an uplink reference signal receiving path power (UL-RSRPP) and a corresponding timestamp; or a downlink reference signal receiving path power (DL-RSRPP) and a corresponding timestamp; wherein a granularity of the timestamp is an OFDM symbol.

In the foregoing embodiment, the first device sends the fourth information to the LMF, reports the positioning information related to the carrier phase measurement value to the LMF, and uses the combined positioning of multiple measurement values to assist the LMF in achieving accurate positioning.

In an embodiment of the present disclosure, the range of the carrier phase measurement value is: $0 \leq$ the carrier phase measurement value $< a \times \pi \times C_1$; a is a positive integer; $C_1$ is granularity, and a unit of $C_1$ is radian; or $0 \leq$ the carrier phase measurement value $< 2^b \times C_2$; b is a positive integer; $C_2$ is granularity, and a unit of $C_2$ is meter.

In the foregoing embodiment, a value range of the carrier phase measurement value is given. where $0 \leq$ the carrier phase measurement value $< a \times \pi \times C_1$; that is, [0, N*pi) with granularity rad, pi means $\pi$. $0 \leq$ the carrier phase measurement value $< 2^b \times C_2$, that is, [0, 2^N) with granularity meter.

The following describes a method of obtaining a carrier phase measurement value of the present disclosure for a specific application example.

Application Example 1: Base Station Assisted (BS-Assisted) Positioning Scenario

First, the step performed by the LMF side may include:

step 1: the LMF sends first information to a base station (BS), where the first information is configured to instruct the first device to report a carrier phase measurement value of a target subcarrier, where the first information includes: sub-frequencies f1, f2, and f3; or, subcarrier IDs such as k1, k2, and k3;

step 2: the LMF receives the carrier phase measurement value reported by the base station, and performs a differential operation to obtain a carrier phase measurement value with a time-frequency offset eliminated, and inputs the carrier phase measurement value into a filtering algorithm such as Kalman filtering, performs multi-shot joint positioning of multiple symbols to obtain an estimated position.

Second, the steps performed by the UE (including the UE and the PRU) side may include:
step 1: sending an SRS signal to a base station by a UE and a PRU.

Third, the steps performed by the base station (BS) side may include:

Step 1, receiving first information from an LMF;

Step 2: receiving an SRS signal from the UE and the PRU, measuring a carrier phase measurement value of a certain path on different measurement subcarriers of different symbols according to the received SRS signal, and obtain a carrier phase measurement value and a timestamp of the target subcarrier according to the first information.

Specifically, the specific example of obtaining the carrier phase measurement value of the target subcarrier according to the carrier phase measurement value of the measurement subcarrier is: as shown in FIG. 6, the target subcarriers k1 and k2 are located on the sym0; the received subcarriers of the UE on sym0 include g1, g2, and g3; subcarriers received on sym1 include subcarriers h1, h2; subcarriers received on sym2 include subcarriers s1, s2. Received subcarriers on sym0 by the TRP include subcarriers G1, G2, G3; subcarriers received on sym1 include subcarriers H1, H2; subcarriers received on sym2 include subcarriers S1, S2.

It should be understood that the subcarriers g1, g2, g3, h1, h2, s1, s2, G1, G2, G3, H1, H2, S1, and S2 are all measurement subcarriers, and RE offset exists between the measurement subcarriers and the target subcarriers.

The obtaining the carrier phase measurement value of the target subcarrier k1 may include: compensating for a phase offset of the BS to the UE on subcarriers g1, h1, and s1 corresponding to sym0, sym1 and sym 2 relative to the target subcarrier k1, to obtain the carrier phase measurement value of the target subcarrier k1 measured on sym0, sym1 and sym2; and compensating for a phase offset of the BS to the PRU on subcarriers G1, H1, and S1 corresponding to sym0, sym1 and sym2 relative to the target subcarrier k1, to obtain the carrier phase measurement value of the target subcarrier k1 measured on sym0, sym1 and sym2.

The obtaining the carrier phase measurement value of the target subcarrier k2 may include: compensating for a phase offset of the BS to the UE on subcarriers G2, H2, and S2 corresponding to sym0, sym1 and sym 2 relative to the target subcarrier k2, to obtain the carrier phase measurement value of the target subcarrier k2 measured on sym0, sym1 and sym2; and compensating for a phase offset of the BS to the PRU on subcarriers G2, H2, and S2 corresponding to sym0, sym1 and sym2 relative to the target subcarrier k2, to obtain the carrier phase measurement value of the target subcarrier k2 measured on sym0, sym1 and sym2.

It may be understood that the principle of obtaining the carrier phase measurement value of the target subcarrier k3 is the same as the principle of obtaining the carrier phase measurement value of the target subcarrier k3, and details are not described herein again.

Step 3: obtaining reliability information of the carrier phase measurement value.

Specifically, reliability information corresponding to carrier phase measurement values of different frequencies of each symbol may be calculated according to a channel impulse response (CIR) or a channel frequency response (CFR). The reliability information includes:

(1) the time delay difference between the Rican factor $\times$ the two paths (referring to the first path and the second path) (Rician factor*delay_diff_path_1_2);
as shown in FIG. 4, delay_diff_path_1_2 refers to a delay difference between the first path and the second path;

(2) The number of REs in the offset between the measurement subcarrier and the target subcarrier of sym0, 1, and 2.

For example, as shown in FIG. 6, for the base station relative UE, the number of REs in the offset between the measurement subcarrier g1 and the target subcarrier k1 on the sym0 is 1 RE, that is, NUM_RE_BIAS(UE,sym0)=1RE. As shown in FIG. 6, for the base station relative TRP, the number of REs in the offset between the measurement subcarrier G1 and the target subcarrier k1 on the sym0 is 2 RE, that is, NUM_RE_BIAS(PRU,sym0)=2RE.

As shown in FIG. 6, for the base station relative to the UE, the number of REs in the offset between the measurement subcarrier h1 and the target subcarrier k1 on the sym1 is 2 RE, that is, NUM_RE_BIAS(UE,sym1)=2RE.

As shown in FIG. 6, for the base station relative to the TRP, the number of REs in the offset between the measurement subcarrier H1 and the target subcarrier k1 on the sym1 is 3 RE, that is, NUM_RE_BIAS(PRU,sym1)=3RE.

Step 4: transmitting the carrier phase measurement value of the target subcarrier obtained on each symbol to the LMF, for example, reporting the carrier phase measurement value UL-POA on the target subcarriers k1, k2, and k3.

During specific implementation, in a case that a plurality of accumulated carrier phase measurement values $\varphi 1$, $\varphi 2$, $\varphi 3$, $\varphi 4$ are obtained. The absolute POA may be reported, that is, directly reporting $\varphi 1$, $\varphi 2$, $\varphi 3$, $\varphi 4$. The phase difference between the absolute POA and the reference POA may also be reported, that is, reporting: $\varphi 1 - \varphi r$, $\varphi 2 - \varphi r$, $\varphi 3 - \varphi r$, $\varphi 4 - \varphi r$, wherein, $\varphi r$ is reference POA. Here, the acquisition dimension of the reference POA may be a multipath (for example, a first path is the reference), a TRP (for example, a serving cell is a reference), a UE (for example, a PRU is a reference), an antenna, a resource, a symbol (for example, an initial measurement symbol is a reference), and a subcarrier (for example, a subcarrier of the highest frequency is a reference).

In addition, for multipath transmission, carrier phase measurement values and timestamps corresponding to a plurality of paths may be reported at each time-frequency resource location. In some embodiments, the reliability information obtained in step 3 is also required to be reported.

Application Example 2: UE-Assisted Positioning Scenario

First, the step performed by the LMF side may include:

Step 1: the LMF sends first information to the UE, where the first information is configured to instruct the first device to report a carrier phase measurement value of the target subcarrier, where the first information includes: the sub-frequencies f1, f2, f3; or, the subcarrier IDs are, for example, k1, k2, and k3

Step 2: the LMF receives the carrier phase measurement value from the UE, and performs a differential operation to obtain a carrier phase measurement value with a time-frequency offset eliminated, and inputs the carrier phase measurement value into a filtering algorithm such as Kalman filtering, performs multi-shot joint positioning of multiple symbols to obtain an estimated position.

Second, the steps performed by the base station (BS) side may include:

Step 1: different BSs (e.g., BS1, BS2) send PRS signals.

Third, the steps performed by the UE side may include:

Step 1: receiving first information from an LMF;

Step 2: receiving a PRS signal from the BS1 and the BS2, measuring a carrier phase measurement value of a certain path on different measurement subcarriers of different symbols according to the received PRS signal, and obtaining a carrier phase measurement value and a timestamp of the target subcarrier according to the first information.

Specifically, the specific example of obtaining the carrier phase measurement value of the target subcarrier according to the carrier phase measurement value of the measurement subcarrier is:

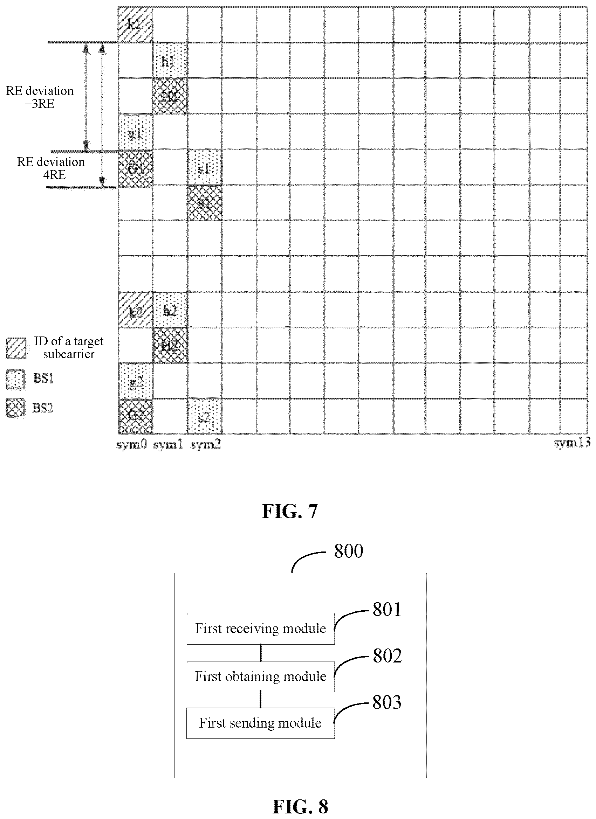

as shown in FIG. 7, the target subcarriers k1 and k2 are located on the sym0; the subcarriers by BS1 on sym0 include g1, g2; subcarriers received on sym1 include subcarriers h1, h2; subcarriers received on sym2 include subcarriers s1, s2; subcarriers by BS2 on sym0 include subcarriers G1, G2; subcarriers received on sym1 include subcarriers H1, H2; subcarriers received on sym2 include subcarriers S1.

It should be understood that the subcarriers g1, g2, h1, h2, s1, s2, G1, G2, H1, H2, S1 are all measurement subcarriers, and RE offset exists between the measurement subcarriers and the target subcarriers.

The obtaining the carrier phase measurement value of the target subcarrier k 1 may include: compensating for a phase offset of UE to BS1 on subcarriers g1, h1, and s1 corresponding to sym0, sym1 and sym 2 relative to the target subcarrier k1, to obtain the carrier phase measurement value of the target subcarrier k1 measured on sym0, sym1 and sym2; and compensating for a phase offset of UE to BS2 on subcarriers G1, H1, and S1 corresponding to sym0, sym1 and sym2 relative to the target subcarrier k1, to obtain the carrier phase measurement value of the target subcarrier k1 measured on sym0, sym1 and sym2.

The obtaining the carrier phase measurement value of the target subcarrier k2 may include: compensating for a phase offset of UE to BS1 on subcarriers g2, h2, and s2 corresponding to sym0, sym1 and sym 2 relative to the target subcarrier k1, to obtain the carrier phase measurement value of the target subcarrier k2 measured on sym0, sym1 and sym2; and compensating for a phase offset of UE to BS2 on subcarriers G2, H2, and S2 corresponding to sym0, sym1 and sym2 relative to the target subcarrier k2, to obtain the carrier phase measurement value of the target subcarrier k2 measured on sym0, sym1 and sym2.

It may be understood that the principle of obtaining the carrier phase measurement value of the target subcarrier k3 is the same as the principle of obtaining the carrier phase measurement value of the target subcarrier k1 and obtaining the carrier phase measurement value of the target subcarrier k2, and details are not described herein again.

Step 3: obtaining reliability information of the carrier phase measurement value.

Specifically, reliability information corresponding to the carrier phase measurement value at different frequencies for each symbol is calculated according to the CIR or the CFR. The reliability information includes:

(1) the time delay difference between the Rican factor $\times$ the two paths (referring to the first path and the second path) (Rician factor*delay_diff_path_1_2);
as shown in FIG. 4, delay_diff_path_1_2 refers to a delay difference between the first path and the second path;

(2) the number of REs in the offset between the measurement subcarrier and the target subcarrier of sym0, 1, and 2.

For example, as shown in FIG. 7, for the UE relative to BS1, the number of REs in the offset between the measurement subcarrier g1 and the target subcarrier k1 on the sym0 is 3 RE, that is, NUM_RE_BIAS(UE,sym0)=1RE.

As shown in FIG. 7, for UE relative BS2, the number of REs in the offset between the measurement subcarrier G1 and the target subcarrier k1 on the sym0 is 4 RE, that is, NUM_RE_BIAS(PRU,sym0)=4RE.

As shown in FIG. 7, for UE relative to BS1, the number of REs in the offset between the measurement subcarrier h1 and the target subcarrier k1 on the sym1 is 1 RE, that is, NUM_RE_BIAS(UE,syml)=1RE.

As shown in FIG. 7, for UE relative to BS2, the number of REs in the offset between the measurement subcarrier H1 and the target subcarrier k1 on the sym1 is 2 RE, that is, NUM_RE_BIAS(PRU,sym1)=3RE.

Step 4: sending the accumulated carrier phase measurement value ACP or the instantaneous phase measurement value ICP of the target subcarrier obtained on each symbol to the LMF.

During specific implementation, a plurality of accumulated carrier phase measurement values $\varphi1$, $\varphi2$, $\varphi_3$, $\varphi4$ are obtained. The absolute POA may be reported, that is, directly reporting $\varphi1$, $\varphi2$, $\varphi3$, $\varphi4$. The phase difference between the absolute POA and the reference POA may also be reported, that is, reporting: $\varphi1 - \varphi r$, $\varphi2 - \varphi r$, $\varphi3 - \varphi r$, $\varphi4 - \varphi r$, wherein, $\varphi r$ is a reference POA.

In addition, for multipath transmission, carrier phase measurement values and timestamps corresponding to a plurality of paths may be reported at each time-frequency resource location. In some embodiments, the reliability information obtained in step 3 is also required to be reported.

In the foregoing embodiment, the LMF may notify the serving cell and the neighbor cell and the UE and the PRU through the first information, where N (N>=1) is required; therefore, the carrier phase measurement values of the same frequency (that is, the target subcarrier) are reported between different base stations, different symbols, the UE and the PRU, so that the consistency of processing measurement values of multiple frequencies and multiple symbols can be ensured, and the CPP positioning precision is improved. In addition, the foregoing embodiments further provide detailed definitions of carrier phase measurement values, various reporting manners, reliability information of carrier phase measurement values, and the like.

Referring to FIG. 8, an embodiment of the present disclosure provides an apparatus 800 of obtaining a carrier phase measurement value, which is applied to a first device and includes: a first receiving module 801, configured to receive first information from a Location Management Function (LMF) entity, wherein the first information is configured to instruct the first device to report a carrier phase measurement value of a target subcarrier; and a first obtaining module 802, configured to obtain the carrier phase measurement value of the target subcarrier; and a first sending module 803, configured to send the carrier phase measurement value to the LMF entity.

In some embodiments, the first information includes at least one of the following: a frequency corresponding to the target subcarrier; an identifier (ID) of the target subcarrier; an index of a carrier set corresponding to the target subcarrier; a physical resource block (PRB) index corresponding to the target subcarrier; a PRB set index corresponding to the target subcarrier; a positioning frequency layer index value corresponding to the target subcarrier; or an index value of a component carrier (CC) corresponding to the target subcarrier.

In some embodiments, the apparatus 800 further includes: a second receiving module, configured to receive second information from the LMF entity, wherein the second information is configured to instruct the first device to report an instantaneous carrier phase measurement value of the target subcarrier, or the second information is configured to indicate the first device to report an accumulated carrier phase measurement value of the target subcarrier.

In some embodiments, in a case that each carrier phase measurement value corresponds to one OFDM symbol, the first sending module 803 is specifically configured to: send at least one of following carrier phase measurement values of the target subcarrier to the LMF entity: an instantaneous carrier phase measurement value corresponding to each OFDM symbol; an accumulated phase measurement value corresponding to each OFDM symbol; an instantaneous carrier phase measurement value corresponding to each OFDM symbol and a corresponding timestamp; or an accumulated phase measurement value corresponding to each OFDM symbol and a corresponding timestamp; wherein a granularity of the timestamp is an OFDM symbol.

In some embodiments, in a case that each carrier phase measurement value corresponds to one resource block, the first sending module 803 is specifically configured to: send at least one of following carrier phase measurement values of the target subcarrier to the LMF entity: an instantaneous carrier phase measurement value corresponding to each resource block; an accumulated phase measurement value corresponding to each resource block; a timestamp corresponding to the instantaneous carrier phase measurement value; or a timestamp corresponding to the accumulated phase measurement value; wherein a granularity of the timestamp is an OFDM symbol or a resource block.

In some embodiments, the carrier phase measurement value includes at least one of following measurement values: an absolute phase of arrival (POA); or a phase difference between the absolute POA and a reference POA.

In some embodiments, the absolute phase of arrival (POA) includes at least one of the following: POA of the first device relative to a second device on a target path; POA of the first device relative to a second device on a target antenna; POA of the first device relative to the second device on a target frequency layer; POA of the first device relative to a second device on a target OFDM symbol; POA of the first device relative to a second device on a target resource; or POA of the first device relative to a second device on a target subcarrier; wherein the first device is a receiving end and the second device is a transmitting end.

In some embodiments, a phase difference between the absolute POA and the reference POA includes at least one of following: a difference between the POA of the first device relative to the second device on the target path and a POA on a reference path; a difference between the POA of the first device relative to the second device on the target antenna and a POA on a reference antenna; a difference between the POA of the first device relative to the second device on the target frequency layer and a POA on a reference frequency layer; a difference between the POA of the first device relative to the second device on the target OFDM symbol and a POA on a reference OFDM symbol; a difference between the POA of the first device relative to the second device on the target resource and a POA on a reference resource; or a difference between the POA of the first device relative to the second device on the target subcarrier and a POA on a reference subcarrier; wherein the first device is a receiving end and the second device is a transmitting end.

In some embodiments, the apparatus 800 further includes a second sending module, configured to send third information to the LMF, wherein the third information includes at least one of the following: a quantity of resource elements (REs) that differ between a subcarrier actually used to measure and the target subcarrier; a quantity of symbols that differ between OFDM symbols actually used to measure and target OFDM symbols; a delay difference between a first path and a second path corresponding to the carrier phase measurement value; a spectral peak width of a first path corresponding to the carrier phase measurement value; a root-mean-square error of the carrier phase measurement value; or a variance of the carrier phase measurement value.

In some embodiments, the apparatus 800 further includes a third sending module, configured to send fourth information to the LMF, wherein the fourth information includes at least one of following: a downlink reference signal time difference (DL-RSTD) and a corresponding timestamp; an uplink relative time of arrival (UL-RTOA) and a corresponding timestamp; an uplink angle of arrival (UL-AOA) and a corresponding timestamp; a time difference between receiving and transmitting of the first device and a corresponding timestamp; an uplink reference signal receiving power (UL-RSRP) and a corresponding timestamp; a downlink reference signal receiving power (DL-RSRP) and a corresponding timestamp; an uplink reference signal receiving path power (UL-RSRPP) and a corresponding timestamp; or a downlink reference signal receiving path power (DL-RSRPP) and a corresponding timestamp; wherein a granularity of the timestamp is an OFDM symbol.

In some embodiments, a range of the carrier phase measurement value is: $0 \leq$ the carrier phase measurement value $< a \times \pi \times C_1$; a is a positive integer; $C_1$ is granularity, and a unit of $C_1$ is radian; or $0 \leq$ the carrier phase measurement value $< 2^b \times C_2$; b is a positive integer; $C_2$ is granularity, and a unit of $C_2$ is meter.

It should be noted that, the apparatus 800 provided in the embodiments of the present disclosure can implement all method steps implemented by the method embodiment on the first device side, and can achieve the same technical effect, and details of the same parts and beneficial effects as those in the method embodiments in this embodiment are not described herein again.

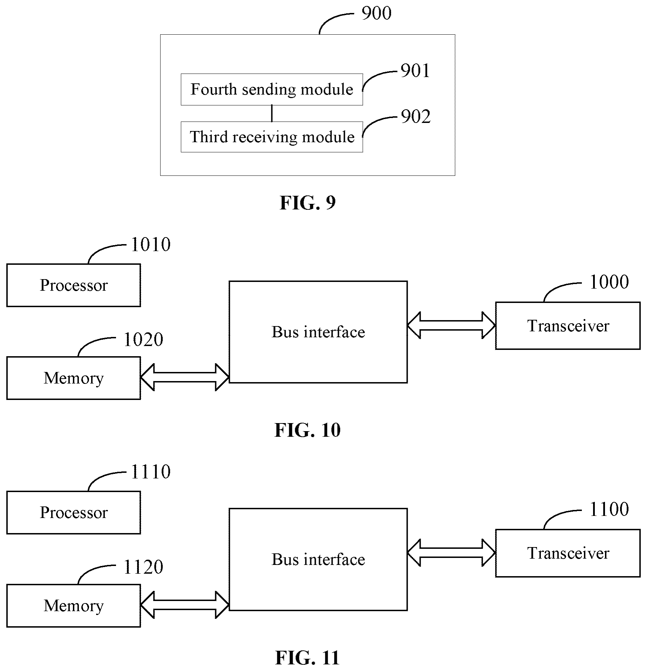

Referring to FIG. 9, an embodiment of the present disclosure provides an apparatus 900 of obtaining a carrier phase measurement value, which is applied to an LMF entity and includes a fourth sending module 901, configured to send first information to a first device, wherein the first information is configured to instruct the first device to report a carrier phase measurement value of a target subcarrier; a third receiving module 902, configured to receive the carrier phase measurement value from the first device.

In some embodiments, the first information includes at least one of following: a frequency corresponding to the target subcarrier; an identifier (ID) of the target subcarrier; an index of a carrier set corresponding to the target subcarrier; a physical resource block (PRB) index corresponding to the target subcarrier; a PRB set index corresponding to the target subcarrier; a positioning frequency layer index value corresponding to the target subcarrier; or an index value of a component carrier (CC) corresponding to the target subcarrier.

In some embodiments, the apparatus 900 further includes a fifth sending module, configured to send second information to the first device, wherein the second information is configured to instruct the first device to report an instantaneous carrier phase measurement value of the target subcarrier, or the second information is configured to indicate the first device to report an accumulated carrier phase measurement value of the target subcarrier.

In some embodiments, in a case that each carrier phase measurement value corresponds to an Orthogonal Frequency Division Multiplexing (OFDM) symbol, the second receiving module 902 is specifically configured to: receive at least one of following carrier phase measurement values of the target subcarrier from the first device: an instantaneous carrier phase measurement value corresponding to each OFDM symbol; an accumulated phase measurement value corresponding to each OFDM symbol; an instantaneous carrier phase measurement value corresponding to each OFDM symbol and a symbol-level timestamp; or an accumulated phase measurement value corresponding to each OFDM symbol and a symbol-level timestamp; wherein a granularity of the timestamp is an OFDM symbol.

In some embodiments, in a case that each carrier phase measurement value corresponds to one resource block, the second receiving module 902 is specifically configured to: receive from the first device at least one of following carrier phase measurement values of the target subcarrier: an instantaneous carrier phase measurement value corresponding to each resource block; an accumulated phase measurement value corresponding to each resource block; a timestamp corresponding to the instantaneous carrier phase measurement value; or a timestamp corresponding to the accumulated phase measurement value; wherein a granularity of the timestamp is an OFDM symbol or a resource block.

In some embodiments, the carrier phase measurement value includes at least one of following measurement values: an absolute phase of arrival (POA); or a phase difference between the absolute POA and a reference POA.

In some embodiments, the absolute phase of arrival (POA) includes at least one of the following: POA of the first device relative to a second device on a target path; POA of the first device relative to a second device on a target antenna; POA of the first device relative to the second device on a target frequency layer; POA of the first device relative to a second device on a target OFDM symbol; POA of the first device relative to a second device on a target resource; or POA of the first device relative to a second device on a target subcarrier; wherein the first device is a receiving end and the second device is a transmitting end.

In some embodiments, a phase difference between the absolute POA and the reference POA includes at least one of following: a difference between the POA of the first device relative to the second device on the target path and a POA on a reference path; a difference between the POA of the first device relative to the second device on the target path and a POA on a reference antenna; a difference between the POA of the first device relative to the second device on the target path and a POA on a reference frequency layer; a difference between the POA of the first device relative to the second device on the target path and a POA on a reference OFDM symbol; a difference between the POA of the first device relative to the second device on the target path and a POA on a reference resource; or a difference between the POA of the first device relative to the second device on the target path and a POA on a reference subcarrier; wherein the first device is a receiving end and the second device is a transmitting end.

In some embodiments, the apparatus 900 further includes a fourth receiving module, configured to receive third information from the first device, wherein the third information includes at least one of the following: a quantity of resource elements (REs) that differ between a subcarrier actually used to measure and the target subcarrier; a quantity of symbols that differ between OFDM symbols actually used to measure and target OFDM symbols; a delay difference between a first path and a second path corresponding to the carrier phase measurement value; a spectral peak width of a first path corresponding to the carrier phase measurement value; a root-mean-square error of the carrier phase measurement value; or a variance of the carrier phase measurement value.

In some embodiments, the apparatus 900 further includes a fifth receiving module, configured to receive fourth information from the first device, wherein the fourth information includes at least one of following: a downlink reference signal time difference (DL-RSTD) and a corresponding timestamp; an uplink relative time of arrival (UL-RTOA) and a corresponding timestamp; an uplink angle of arrival (UL-AOA) and a corresponding timestamp; a time difference between receiving and transmitting of the first device and a corresponding timestamp; an uplink reference signal receiving power (UL-RSRP) and a corresponding timestamp; a downlink reference signal receiving power (DL-RSRP) and a corresponding timestamp; an uplink reference signal receiving path power (UL-RSRPP) and a corresponding timestamp; or a downlink reference signal receiving path power (DL-RSRPP) and a corresponding timestamp; wherein a granularity of the timestamp is an OFDM symbol.

In some embodiments, a range of the carrier phase measurement value is: $0 \leq$ the carrier phase measurement value $< a \times \pi \times C_1$; a is a positive integer; $C_1$ is granularity, and a unit of $C_1$ is radian; or $0 \leq$ the carrier phase measurement value $< 2^b \times C_2$; b is a positive integer; $C_2$ is granularity, and a unit of $C_2$ is meter.

It should be noted that, the apparatus 900 provided in the embodiments of the present disclosure can implement all method steps implemented by the method embodiment on the LMF entity side, and can achieve the same technical effect, and details of the same parts and beneficial effects as those in the method embodiments in this embodiment are not described herein again.

Referring to FIG. 10, an embodiment of the present disclosure provides a first device, including: a processor 1010; and a memory 1020 connected to the processor 1010 through a bus interface, where the memory 1020 is configured to store a program and data used when the processor 1010 performs an operation, and the processor 1010 invokes and executes the program and data stored in the memory 1020. The transceiver 900 is connected to the bus interface, and is configured to receive and send data under the control of the processor 1010; and the processor 1010 is configured to read a program in the memory 1020 to perform the following processes: receiving first information from a Location Management Function (LMF) entity, wherein the first information is configured to instruct the first device to report a carrier phase measurement value of a target subcarrier; obtaining the carrier phase measurement value of the target subcarrier; and sending the carrier phase measurement value to the LMF entity.

In some embodiments, the first information includes at least one of following: a frequency corresponding to the target subcarrier; an identifier (ID) of the target subcarrier; an index of a carrier set corresponding to the target subcarrier; a physical resource block (PRB) index corresponding to the target subcarrier; a PRB set index corresponding to the target subcarrier; a positioning frequency layer index value corresponding to the target subcarrier; or an index value of a component carrier (CC) corresponding to the target subcarrier.

In some embodiments, the processor 1010 is further configured to read a program in the memory 920 to perform the following processes:
receiving second information from the LMF entity, wherein the second information is configured to instruct the first device to report an instantaneous carrier phase measurement value of the target subcarrier, or the second information is configured to indicate the first device to report an accumulated carrier phase measurement value of the target subcarrier.

In some embodiments, in a case that each carrier phase measurement value corresponds to an Orthogonal Frequency Division Multiplexing (OFDM) symbol, the processor 910 is further configured to read a program in the memory 1020 to perform the following processes:
an instantaneous carrier phase measurement value corresponding to each OFDM symbol; an accumulated phase measurement value corresponding to each OFDM symbol; an instantaneous carrier phase measurement value corresponding to each OFDM symbol and a corresponding timestamp; or an accumulated phase measurement value corresponding to each OFDM symbol and a corresponding timestamp; wherein a granularity of the timestamp is an OFDM symbol.

In some embodiments, in a case that each carrier phase measurement value corresponds to one resource block, the processor 910 is further configured to read a program in the memory 1020 to perform the following processes: sending at least one of following carrier phase measurement values of the target subcarrier to the LMF entity: an instantaneous carrier phase measurement value corresponding to each resource block; an accumulated phase measurement value corresponding to each resource block; a timestamp corresponding to the instantaneous carrier phase measurement value; or a timestamp corresponding to the accumulated phase measurement value; wherein a granularity of the timestamp is an OFDM symbol or a resource block.

In some embodiments, the carrier phase measurement value includes at least one of following measurement values: an absolute phase of arrival (POA); or a phase difference between the absolute POA and a reference POA.

In some embodiments, the absolute phase of arrival (POA) includes at least one of the following: POA of the first device relative to a second device on a target path; POA of the first device relative to a second device on a target antenna; POA of the first device relative to the second device on a target frequency layer; POA of the first device relative to a second device on a target OFDM symbol; POA of the first device relative to a second device on a target resource; or POA of the first device relative to a second device on a target subcarrier; wherein the first device is a receiving end and the second device is a transmitting end.

In some embodiments, a phase difference between the absolute POA and the reference POA includes at least one of following: a difference between the POA of the first device relative to the second device on the target path and a POA on a reference path; a difference between the POA of the first device relative to the second device on the target antenna and a POA on a reference antenna; a difference between the POA of the first device relative to the second device on the target frequency layer and a POA on a reference frequency layer; a difference between the POA of the first device relative to the second device on the target OFDM symbol and a POA on a reference OFDM symbol; a difference between the POA of the first device relative to the second device on the target resource and a POA on a reference resource; or a difference between the POA of the first device relative to the second device on the target subcarrier and a POA on a reference subcarrier; wherein the first device is a receiving end and the second device is a transmitting end.

Optionally, the processor 1010 is further configured to read a program in the memory 1020 to perform the following processes: sending third information to the LMF, wherein the third information includes at least one of the following: a quantity of resource elements (REs) that differ between a subcarrier actually used to measure and the target subcarrier; a quantity of symbols that differ between OFDM symbols actually used to measure and target OFDM symbols; a delay difference between a first path and a second path corresponding to the carrier phase measurement value; a spectral peak width of a first path corresponding to the carrier phase measurement value; a root-mean-square error of the carrier phase measurement value; or a variance of the carrier phase measurement value.

Optionally, the processor 1010 is further configured to read a program in the memory 1020 to perform the following processes: sending fourth information to the LMF, wherein the fourth information includes at least one of following: a downlink reference signal time difference (DL-RSTD) and a corresponding timestamp; an uplink relative time of arrival (UL-RTOA) and a corresponding timestamp; an uplink angle of arrival (UL-AOA) and a corresponding timestamp; a time difference between receiving and transmitting of the first device and a corresponding timestamp; an uplink reference signal receiving power (UL-RSRP) and a corresponding timestamp; a downlink reference signal receiving power (DL-RSRP) and a corresponding timestamp; an uplink reference signal receiving path power (UL-RSRPP) and a corresponding timestamp; or a downlink reference signal receiving path power (DL-RSRPP) and a corresponding timestamp; wherein a granularity of the timestamp is an OFDM symbol.

In some embodiments, a range of the carrier phase measurement value is: $0 \leq$ the carrier phase measurement value $< a \times \pi \times C_1$; a is a positive integer; $C_1$ is granularity, and a unit of $C_1$ is radian; or $0 \leq$ the carrier phase measurement value $< 2^b \times C_2$; b is a positive integer; $C_2$ is granularity, and a unit of $C_2$ is meter.

In FIG. 10, the bus architecture may include any number of interconnected buses and bridges, and specifically, various circuits of one or more processors represented by the processor 1010 and a memory represented by the memory 1020 are linked together. The bus architecture may also link various other circuits, such as a peripheral device, a voltage regulator, and a power management circuit, which are well known in the art, and therefore are not further described herein. The bus interface provides an interface. The transceiver 1000 may be a plurality of elements, including a transmitter and a receiver, and provides units for communicating with various other apparatuses on a transmission medium, where the transmission mediums include transmission media such as a wireless channel, a wired channel, and an optical cable. For different user equipment, the user interface 1030 may also be an interface capable of being externally connected to a device needing to be internally connected, and the connected device includes but is not limited to a keypad, a display, a speaker, a microphone, a joystick, and the like.

The processor 1010 is responsible for managing the bus architecture and general processing, and the memory 920 may store data used by the processor 510 when performing operations.

Optionally, the processor 1010 may be a Central Processing Unit (CPU), an Application Specific Integrated Circuit (ASIC), a Field-Programmable Gate Array (FPGA), or a Complex Programmable Logic Device (CPLD), and the processor may also use a multi-core architecture.

The processor invokes the computer program stored in the memory, and is configured to perform any one of the methods provided in the embodiments of the present disclosure according to the obtained executable instructions. The processor and the memory may also be physically separated.

Referring to FIG. 11, an embodiment of the present disclosure provides an LMF entity, including: a processor 1110; and a memory 1120 connected to the processor 1110 through a bus interface, where the memory 1120 is configured to store a program and data used by the processor 1110 when performing an operation, and the processor 1110 invokes and executes the program and data stored in the memory 1120.

The transceiver 1100 is connected to the bus interface, and is configured to receive and send data under the control of the processor 1110; and the processor 1110 is configured to read the program in the memory 1120 to perform the following processes: sending first information to a first device, wherein the first information is configured to instruct the first device to report a carrier phase measurement value of a target subcarrier; receiving the carrier phase measurement value from the first device.

In some embodiments, the first information includes at least one of following: a frequency corresponding to the target subcarrier; an identifier (ID) of the target subcarrier; an index of a carrier set corresponding to the target subcarrier; a physical resource block (PRB) index corresponding to the target subcarrier; a PRB set index corresponding to the target subcarrier; a positioning frequency layer index value corresponding to the target subcarrier; or an index value of a component carrier (CC) corresponding to the target subcarrier.

In some embodiments, the processor 1110 is further configured to read a program in the memory 1120 to perform the following processes:

sending second information to the first device, wherein the second information is configured to instruct the first device to report an instantaneous carrier phase measurement value of the target subcarrier, or the second information is configured to indicate the first device to report an accumulated carrier phase measurement value of the target subcarrier.

In some embodiments, in a case that each carrier phase measurement value corresponds to an Orthogonal Frequency Division Multiplexing (OFDM) symbol, the processor 1110 is further configured to read a program in the memory 1120 to perform the following processes:

receiving at least one of following carrier phase measurement values of the target subcarrier from the first device: an instantaneous carrier phase measurement value corresponding to each OFDM symbol; an accumulated phase measurement value corresponding to each OFDM symbol; an instantaneous carrier phase measurement value corresponding to each OFDM symbol and a symbol-level timestamp; or an accumulated phase measurement value corresponding to each OFDM symbol and a symbol-level timestamp; wherein a granularity of the timestamp is an OFDM symbol.

Optionally, in a case that each carrier phase measurement value corresponds to one resource block, the processor 1110 is further configured to read a program in the memory 1120 to perform the following processes:

receiving from the first device at least one of following carrier phase measurement values of the target subcarrier: an instantaneous carrier phase measurement value corresponding to each resource block; an accumulated phase measurement value corresponding to each resource block; a timestamp corresponding to the instantaneous carrier phase measurement value; or a timestamp corresponding to the accumulated phase measurement value; wherein a granularity of the timestamp is an OFDM symbol or a resource block.

In some embodiments, the carrier phase measurement value includes at least one of following measurement values: an absolute phase of arrival (POA); or a phase difference between the absolute POA and a reference POA.

In some embodiments, the absolute phase of arrival (POA) includes at least one of the following: POA of the first device relative to a second device on a target path; POA of the first device relative to a second device on a target antenna; POA of the first device relative to the second device on a target frequency layer; POA of the first device relative to a second device on a target OFDM symbol; POA of the first device relative to a second device on a target resource; or POA of the first device relative to a second device on a target subcarrier; wherein the first device is a receiving end and the second device is a transmitting end.

In some embodiments, a phase difference between the absolute POA and the reference POA includes at least one of following: a difference between the POA of the first device relative to the second device on the target path and a POA on a reference path; a difference between the POA of the first device relative to the second device on the target path and a POA on a reference antenna; a difference between the POA of the first device relative to the second device on the target path and a POA on a reference frequency layer; a difference between the POA of the first device relative to the second device on the target path and a POA on a reference OFDM symbol; a difference between the POA of the first device relative to the second device on the target path and a POA on a reference resource; or a difference between the POA of the first device relative to the second device on the target path and a POA on a reference subcarrier; wherein the first device is a receiving end and the second device is a transmitting end.

Optionally, the processor 1110 is further configured to read a program in the memory 1120 to perform the following processes:

sending third information to the LMF, wherein the third information includes at least one of the following: a quantity of resource elements (REs) that differ between a subcarrier actually used to measure and the target subcarrier; a quantity of symbols that differ between OFDM symbols actually used to measure and target OFDM symbols; a delay difference between a first path and a second path corresponding to the carrier phase measurement value; a spectral peak width of a first path corresponding to the carrier phase measurement value; a root-mean-square error of the carrier phase measurement value; or a variance of the carrier phase measurement value.

Optionally, the processor 1110 is further configured to read a program in the memory 1120 to perform the following processes:

receiving fourth information from the first device, wherein the fourth information includes at least one of following: a downlink reference signal time difference (DL-RSTD) and a corresponding timestamp; an uplink relative time of arrival (UL-RTOA) and a corresponding timestamp; an uplink angle of arrival (UL-AOA) and a corresponding timestamp; a time difference between receiving and transmitting of the first device and a corresponding timestamp; an uplink reference signal receiving power (UL-RSRP) and a corresponding timestamp; a downlink reference signal receiving power (DL-RSRP) and a corresponding timestamp; an uplink reference signal receiving path power (UL-RSRPP) and a corresponding timestamp; or a downlink reference signal receiving path power (DL-RSRPP) and a corresponding timestamp; wherein a granularity of the timestamp is an OFDM symbol.

In some embodiments, a range of the carrier phase measurement value is: $0 \leq$ the carrier phase measurement value $< a \times \pi \times C_1$; a is a positive integer; $C_1$ is granularity, and a unit of $C_1$ is radian; or $0 \leq$ the carrier phase measurement value $< 2^b \times C_2$; b is a positive integer; $C_2$ is granularity, and a unit of $C_2$ is meter.

In FIG. 11, the bus architecture may include any number of interconnected buses and bridges, and specifically, various circuits of one or more processors represented by the processor 1110 and a memory represented by the memory 1120 are linked together. The bus architecture may also link various other circuits, such as a peripheral device, a voltage regulator, and a power management circuit, which are well known in the art, and therefore are not further described herein. The bus interface provides an interface. The transceiver 1100 may be a plurality of elements, including a transmitter and a receiver, and provides units for communicating with various other apparatuses on a transmission medium, where the transmission mediums include transmission media such as a wireless channel, a wired channel, and an optical cable. The processor 1110 is responsible for managing the bus architecture and general processing, and the memory 1120 may store data used by the processor 1110 when performing operations.

The processor 1110 may be a central processing unit (CPU), an application specific integrated circuit (ASIC), a field-programmable gate array (FPGA), or a complex programmable logic device (CPLD), and the processor may also adopt a multi-core architecture.

The present disclosure further provides a processor-readable storage medium, where the processor-readable storage medium stores a computer program, and the computer program is configured to cause the processor to perform a method of obtaining a carrier phase measurement value on a first device side or an LMF side.

The processor-readable storage medium may be any usable medium or data storage device accessible by a processor, including but not limited to a magnetic memory (for example, a floppy disk, a hard disk, a magnetic tape, a magneto-optical disk (MO), an optical storage (such as a Compact Disk (CD), a Digital Versatile Disc (DVD), a Blu-ray disk (BD), a High-Definition Versatile Disc (HVD), and the like), and a semi-conductor storage (such as a Read-Only Memory (ROM), an Erasable Programable ROM (EPROM), an Electrically EPROM (EEPROM), a non-volatile memory (NAND Flash), a Solid State Disk (Solid State Drive, SSD), etc.).

It should be noted that the division of the units in the embodiments of the present disclosure is schematic, and is merely a logical function division, and there may be another division manner in actual implementation. In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on such understanding, the essential part or a part contributing to the related art of technical solutions of the present disclosure may be embodied in the form of a software product, and the computer software product is stored in a storage medium, and includes several instructions for causing a computer device (which may be a personal computer, a server, or a network device) or a processor to perform all or part of the steps of the methods described in the embodiments of the present disclosure. The foregoing storage medium includes any medium that can store program codes, such as a USB flash drive, a removable hard disk, a Read-Only Memory (ROM), a Random Access Memory (RAM), a magnetic disk, or an optical disk.

A person skilled in the art should understand that the embodiments of the present disclosure may be provided as a method, a system, or a computer program product. Therefore, the present disclosure may take the form of an entire hardware embodiment, an entire software embodiment, or an embodiment combining software and hardware aspects. Moreover, the present disclosure may use a form of a computer program product implemented on one or more computer-usable storage media (including but not limited to a disk memory, an optical memory, and the like) including computer-usable program codes.

These processor-executable instructions may also be stored in a processor-readable memory that can direct a computer or other programmable data processing device to function in a particular manner, such that the instructions stored in the processor-readable memory produce an article of manufacture including an instruction device that implements the functions specified in one or more flows of the flowchart and/or one or more blocks of the block diagram.

These processor-executable instructions may also be loaded onto a computer or other programmable data processing device such that a series of operational steps are performed on the computer or other programmable device to produce a computer-implemented process, such that the instructions executed on the computer or other programmable device provide steps for implementing the functions specified in one or more flows of the flowchart and/or one or more blocks of the block diagram.

It should be noted that the division of the foregoing modules is merely a division of logical functions, and may be completely or partially integrated into one physical entity during actual implementation, or may be physically separated. The modules may all be implemented in a form of software invoked by a processing element, or may all be implemented in a form of hardware; or some modules may be implemented in a form of invoking software by using a processing element, and some modules are implemented in a form of hardware. For example, a module may be a separately established processing element, or may be integrated in a chip of the foregoing apparatus, or may be stored in a memory of the apparatus in a form of program codes, and a processing element of the foregoing apparatus invokes and executes the functions of the foregoing determining module. Implementation of other modules is similar. In addition, all or part of these modules may be integrated together, or may be implemented independently. The processing element described herein may be an integrated circuit having a signal processing capability. In an implementation process, steps of the foregoing method or the foregoing modules may be completed by using an integrated logic circuit of hardware in the processor element or an instruction in a form of software.

For example, each module, unit, sub-unit, or sub-module may be one or more integrated circuits configured to implement the above method, for example, one or more Application Specific Integrated Circuit (ASIC), or one or more microprocessors (DSP), or one or more field programmable gate arrays (FPGA). For another example, when the foregoing module is implemented in a form of scheduling the program codes by using a processing element, the processing element may be a general-purpose processor, for example, a central processing unit (Central Processing Unit, CPU), or another processor that can invoke the program code. For another example, these modules may be integrated together and implemented in a form of a system-on-a-chip (SOC).

In the specification and claims of the present disclosure, the terms "first", "second", and the like are intended to distinguish between similar objects, and are not necessarily used to describe a specific order or sequence. It should be understood that the terms used in this way can be interchanged under appropriate circumstances, so that the embodiments of the present disclosure described herein, for example, are implemented in an order other than those illustrated or described herein. In addition, the terms "include" and "have" and any deformation thereof are intended to cover a non-exclusive inclusion, for example, a process, method, system, product, or device that includes a series of steps or units is not necessarily limited to those steps or units listed clearly, but may include other steps or units that are not clearly listed or inherent to these processes, methods, products, or devices. In addition, the specification and claims use "and/or" to refer to at least one of the connected objects, such as A and/or B and/or C, representing the presence of A, B alone, C alone, and both A and B, both B and C exist, both A and C exist, and A, B and C both exist. Similarly, use of "at least one of A and B" in this specification and claims should be understood as "A alone, B alone, or both A and B exist".

Evidently those skilled in the art can make various modifications and variations to the disclosure without departing from the spirit and scope of the disclosure. In this way, if these modifications and variations of the present disclosure fall within the scope of the claims of the present disclosure and their equivalent technologies, the present disclosure is also intended to include these modifications and variations.

**Claims**

1. A method of obtaining a carrier phase measurement value, applied to a first device, comprising:

    receiving first information from a Location Management Function (LMF) entity, wherein the first information is configured to instruct the first device to report a carrier phase measurement value of a target subcarrier;
    obtaining the carrier phase measurement value of the target subcarrier; and
    sending the carrier phase measurement value to the LMF entity.

2. The method of obtaining the carrier phase measurement value according to claim 1, wherein the first information comprises at least one of following:

    a frequency corresponding to the target subcarrier;
    an identifier (ID) of the target subcarrier;
    an index of a carrier set corresponding to the target subcarrier;
    a physical resource block (PRB) index corresponding to the target subcarrier;
    a PRB set index corresponding to the target subcarrier;
    a positioning frequency layer index value corresponding to the target subcarrier; or
    an index value of a component carrier (CC) corresponding to the target subcarrier.

3. The method of obtaining the carrier phase measurement value according to claim 1, further comprising:
   receiving second information from the LMF entity, wherein the second information is configured to instruct the first device to report an instantaneous carrier phase measurement value of the target subcarrier, or the second information is configured to indicate the first device to report an accumulated carrier phase measurement value of the target subcarrier.

4. The method of obtaining the carrier phase measurement value according to claim 1, wherein in a case that each carrier phase measurement value corresponds to an Orthogonal Frequency Division Multiplexing (OFDM) symbol, sending the carrier phase measurement value to the LMF entity comprises sending at least one of following carrier phase measurement values of the target subcarrier to the LMF entity:

    an instantaneous carrier phase measurement value corresponding to each OFDM symbol;
    an accumulated phase measurement value corresponding to each OFDM symbol;
    an instantaneous carrier phase measurement value corresponding to each OFDM symbol and a corresponding timestamp; or
    an accumulated phase measurement value corresponding to each OFDM symbol and a corresponding timestamp;
    wherein a granularity of the timestamp is an OFDM symbol.

5. The method of obtaining the carrier phase measurement value according to claim 1, wherein in a case that each carrier phase measurement value corresponds to one resource block, sending the carrier phase measurement value to the LMF entity comprises sending at least one of following carrier phase measurement values of the target subcarrier to the LMF entity:

    an instantaneous carrier phase measurement value corresponding to each resource block;

an accumulated phase measurement value corresponding to each resource block;

a timestamp corresponding to the instantaneous carrier phase measurement value; or

a timestamp corresponding to the accumulated phase measurement value;

wherein a granularity of the timestamp is an OFDM symbol or a resource block.

6. The method of obtaining the carrier phase measurement value according to claim 1, wherein the carrier phase measurement value comprises at least one of following measurement values:

an absolute phase of arrival (POA); or

a phase difference between the absolute POA and a reference POA.

7. The method of obtaining the carrier phase measurement value according to claim 6, wherein the absolute phase of arrival (POA) comprises at least one of the following:

POA of the first device relative to a second device on a target path;

POA of the first device relative to a second device on a target antenna;

POA of the first device relative to the second device on a target frequency layer;

POA of the first device relative to a second device on a target OFDM symbol;

POA of the first device relative to a second device on a target resource; or

POA of the first device relative to a second device on a target subcarrier;

wherein the first device is a receiving end and the second device is a transmitting end.

8. The method of obtaining the carrier phase measurement value according to claim 6, wherein a phase difference between the absolute POA and the reference POA comprises at least one of following:

a difference between the POA of the first device relative to the second device on the target path and a POA on a reference path;

a difference between the POA of the first device relative to the second device on the target antenna and a POA on a reference antenna;

a difference between the POA of the first device relative to the second device on the target frequency layer and a POA on a reference frequency layer;

a difference between the POA of the first device relative to the second device on the target OFDM symbol and a POA on a reference OFDM symbol;

a difference between the POA of the first device relative to the second device on the target resource and a POA on a reference resource; or

a difference between the POA of the first device relative to the second device on the target subcarrier and a POA on a reference subcarrier;

wherein the first device is a receiving end and the second device is a transmitting end.

9. The method of obtaining the carrier phase measurement value according to claim 1, further comprising:
sending third information to the LMF, wherein the third information comprises at least one of the following:

a quantity of resource elements (REs) that differ between a subcarrier actually used to measure and the target subcarrier;

a quantity of symbols that differ between OFDM symbols actually used to measure and target OFDM symbols;

a delay difference between a first path and a second path corresponding to the carrier phase measurement value;

a spectral peak width of a first path corresponding to the carrier phase measurement value;

a root-mean-square error of the carrier phase measurement value; or

a variance of the carrier phase measurement value.

10. The method of obtaining the carrier phase measurement value according to claim 1, further comprising:
sending fourth information to the LMF, wherein the fourth information comprises at least one of following:

a downlink reference signal time difference (DL-RSTD) and a corresponding timestamp;

an uplink relative time of arrival (UL-RTOA) and a corresponding timestamp;

an uplink angle of arrival (UL-AOA) and a corresponding timestamp;

a time difference between receiving and transmitting of the first device and a corresponding timestamp;

an uplink reference signal receiving power (UL-RSRP) and a corresponding timestamp;

a downlink reference signal receiving power (DL-RSRP) and a corresponding timestamp;

an uplink reference signal receiving path power (UL-RSRPP) and a corresponding timestamp; or

a downlink reference signal receiving path power (DL-RSRPP) and a corresponding timestamp;

wherein a granularity of the timestamp is an OFDM symbol.

11. The method of obtaining the carrier phase measurement value according to claim 1, wherein a range of the carrier phase measurement value is:

$0 \leq$ the carrier phase measurement value $< a \times \pi \times C_1$; a is a positive integer; $C_1$ is granularity, and a unit of $C_1$ is radian; or

$0 \leq$ the carrier phase measurement value $< 2^b \times C_2$; b is a positive integer; $C_2$ is granularity, and a unit of $C_2$ is meter.

12. A method of obtaining a carrier phase measurement value, applied to an LMF entity, comprising:

sending first information to a first device, wherein the first information is configured to instruct the first device to report a carrier phase measurement value of a target subcarrier;

receiving the carrier phase measurement value from the first device.

13. The method of obtaining the carrier phase measurement value according to claim 12, wherein the first information comprises at least one of following:

a frequency corresponding to the target subcarrier;

an identifier (ID) of the target subcarrier;

an index of a carrier set corresponding to the target subcarrier;

a physical resource block (PRB) index corresponding to the target subcarrier;

a PRB set index corresponding to the target subcarrier;

a positioning frequency layer index value corresponding to the target subcarrier; or

an index value of a component carrier (CC) corresponding to the target subcarrier.

14. The method of obtaining the carrier phase measurement value according to claim 12, further comprising: sending second information to the first device, wherein the second information is configured to instruct the first device to report an instantaneous carrier phase measurement value of the target subcarrier, or the second information is configured to indicate the first device to report an accumulated carrier phase measurement value of the target subcarrier.

15. The method of obtaining the carrier phase measurement value according to claim 12, wherein in a case that each carrier phase measurement value corresponds to an Orthogonal Frequency Division Multiplexing (OFDM) symbol, receiving the carrier phase measurement value from the first device comprises receiving at least one of following carrier phase measurement values of the target subcarrier from the first device:

an instantaneous carrier phase measurement value corresponding to each OFDM symbol;

an accumulated phase measurement value corresponding to each OFDM symbol;

an instantaneous carrier phase measurement value corresponding to each OFDM symbol and a symbol-level timestamp; or

an accumulated phase measurement value corresponding to each OFDM symbol and a symbol-level timestamp;

wherein a granularity of the timestamp is an OFDM symbol.

16. The method of obtaining the carrier phase measurement value according to claim 12, wherein in a case that each carrier phase measurement value corresponds to one resource block, receiving the carrier phase measurement value from the first device comprises receiving from the first device at least one of following carrier phase measurement values of the target subcarrier:

an instantaneous carrier phase measurement value corresponding to each resource block;

an accumulated phase measurement value corresponding to each resource block;

a timestamp corresponding to the instantaneous carrier phase measurement value; or

a timestamp corresponding to the accumulated phase measurement value;

wherein a granularity of the timestamp is an OFDM symbol or a resource block.

17. The method of obtaining the carrier phase measurement value according to claim 12, wherein the carrier phase measurement value comprises at least one of following measurement values:

> an absolute phase of arrival (POA); or
> a phase difference between the absolute POA and a reference POA.

18. The method of obtaining the carrier phase measurement value according to claim 12, further comprising:
receiving third information from the first device, wherein the third information comprises at least one of the following:

> a quantity of resource elements (REs) that differ between a subcarrier actually used to measure and the target subcarrier;
> a quantity of symbols that differ between OFDM symbols actually used to measure and target OFDM symbols;
> a delay difference between a first path and a second path corresponding to the carrier phase measurement value;
> a spectral peak width of a first path corresponding to the carrier phase measurement value;
> a root-mean-square error of the carrier phase measurement value; or
> a variance of the carrier phase measurement value.

19. The method of obtaining the carrier phase measurement value according to claim 12, further comprising:
receiving fourth information from the first device, wherein the fourth information comprises at least one of following:

> a downlink reference signal time difference (DL-RSTD) and a corresponding timestamp;
> an uplink relative time of arrival (UL-RTOA) and a corresponding timestamp;
> an uplink angle of arrival (UL-AOA) and a corresponding timestamp;
> a time difference between receiving and transmitting of the first device and a corresponding timestamp;
> an uplink reference signal receiving power (UL-RSRP) and a corresponding timestamp;
> a downlink reference signal receiving power (DL-RSRP) and a corresponding timestamp;
> an uplink reference signal receiving path power (UL-RSRPP) and a corresponding timestamp; or
> a downlink reference signal receiving path power (DL-RSRPP) and a corresponding timestamp;
> wherein a granularity of the timestamp is an OFDM symbol.

20. A first device, comprising a transceiver, a memory, a processor, and a computer program stored on the memory and executable on the processor, wherein the processor is configured to read the computer program in a memory and perform the following processes:

> receiving first information from a Location Management Function (LMF) entity, wherein the first information is configured to instruct the first device to report a carrier phase measurement value of a target subcarrier;
> obtaining the carrier phase measurement value of the target subcarrier; and
> sending the carrier phase measurement value to the LMF entity.

21. The first device according to claim 20, wherein the first information comprises at least one of following:

> a frequency corresponding to the target subcarrier;
> an identifier (ID) of the target subcarrier;
> an index of a carrier set corresponding to the target subcarrier;
> a physical resource block (PRB) index corresponding to the target subcarrier;
> a PRB set index corresponding to the target subcarrier;
> a positioning frequency layer index value corresponding to the target subcarrier; or
> an index value of a component carrier (CC) corresponding to the target subcarrier.

22. The first device according to claim 20, wherein the processor is further configured to read a computer program in the memory to perform the following process:
receiving second information from the LMF entity, wherein the second information is configured to instruct the first device to report an instantaneous carrier phase measurement value of the target subcarrier, or the second information is configured to indicate the first device to report an accumulated carrier phase measurement value of the target subcarrier.

23. The first device according to claim 20, wherein in a case that each carrier phase measurement value corresponds to an Orthogonal Frequency Division Multiplexing (OFDM) symbol, the processor is further configured to read a program in the memory to perform the following processes:
sending at least one of following carrier phase measurement values of the target subcarrier to the LMF entity:

an instantaneous carrier phase measurement value corresponding to each OFDM symbol;
an accumulated phase measurement value corresponding to each OFDM symbol;
an instantaneous carrier phase measurement value corresponding to each OFDM symbol and a corresponding timestamp; or
an accumulated phase measurement value corresponding to each OFDM symbol and a corresponding timestamp;
wherein a granularity of the timestamp is an OFDM symbol.

24. The first device according to claim 20, wherein in a case that each carrier phase measurement value corresponds to one resource block, the processor is further configured to read a program in the memory to perform the following processes:
sending at least one of following carrier phase measurement values of the target subcarrier to the LMF entity:

an instantaneous carrier phase measurement value corresponding to each resource block;
an accumulated phase measurement value corresponding to each resource block;
a timestamp corresponding to the instantaneous carrier phase measurement value; or
a timestamp corresponding to the accumulated phase measurement value;
wherein a granularity of the timestamp is an OFDM symbol or a resource block.

25. The first device according to claim 20, wherein the carrier phase measurement value comprises at least one of following measurement values:

an absolute phase of arrival (POA); or
a phase difference between the absolute POA and a reference POA.

26. The first device according to claim 25, wherein the absolute phase of arrival (POA) comprises at least one of the following:

POA of the first device relative to a second device on a target path;
POA of the first device relative to a second device on a target antenna;
POA of the first device relative to the second device on a target frequency layer;
POA of the first device relative to a second device on a target OFDM symbol;
POA of the first device relative to a second device on a target resource; or
POA of the first device relative to a second device on a target subcarrier;
wherein the first device is a receiving end and the second device is a transmitting end.

27. The first device according to claim 25, wherein a phase difference between the absolute POA and the reference POA comprises at least one of following:

a difference between the POA of the first device relative to the second device on the target path and a POA on a reference path;
a difference between the POA of the first device relative to the second device on the target antenna and a POA on a reference antenna;
a difference between the POA of the first device relative to the second device on the target frequency layer and a POA on a reference frequency layer;
a difference between the POA of the first device relative to the second device on the target OFDM symbol and a POA on a reference OFDM symbol;
a difference between the POA of the first device relative to the second device on the target resource and a POA on a reference resource; or
a difference between the POA of the first device relative to the second device on the target subcarrier and a POA on a reference subcarrier;
wherein the first device is a receiving end and the second device is a transmitting end.

28. The first device according to claim 20, wherein the processor is further configured to read a program in the memory to perform the following process:

sending third information to the LMF, wherein the third information comprises at least one of the following:

a quantity of resource elements (REs) that differ between a subcarrier actually used to measure and the target subcarrier;
a quantity of symbols that differ between OFDM symbols actually used to measure and target OFDM symbols;
a delay difference between a first path and a second path corresponding to the carrier phase measurement value;
a spectral peak width of a first path corresponding to the carrier phase measurement value;
a root-mean-square error of the carrier phase measurement value; or
a variance of the carrier phase measurement value.

29. The first device according to claim 20, wherein the processor is further configured to read a program in the memory to perform the following process:
sending fourth information to the LMF, wherein the fourth information comprises at least one of following:

a downlink reference signal time difference (DL-RSTD) and a corresponding timestamp;
an uplink relative time of arrival (UL-RTOA) and a corresponding timestamp;
an uplink angle of arrival (UL-AOA) and a corresponding timestamp;
a time difference between receiving and transmitting of the first device and a corresponding timestamp;
an uplink reference signal receiving power (UL-RSRP) and a corresponding timestamp;
a downlink reference signal receiving power (DL-RSRP) and a corresponding timestamp;
an uplink reference signal receiving path power (UL-RSRPP) and a corresponding timestamp; or
a downlink reference signal receiving path power (DL-RSRPP) and a corresponding timestamp;
wherein a granularity of the timestamp is an OFDM symbol.

30. The first device according to claim 20, wherein a range of the carrier phase measurement value is:

$0 \leq$ the carrier phase measurement value $< a \times \pi \times C_1$; a is a positive integer; $C_1$ is granularity, and a unit of $C_1$ is radian; or
$0 \leq$ the carrier phase measurement value $< 2^b \times C_2$; b is a positive integer; $C_2$ is granularity, and a unit of $C_2$ is meter.

31. An LMF entity, comprising a transceiver, a memory, a processor, and a computer program stored on the memory and executable on the processor, wherein the processor is configured to read a program in a memory and perform the following processes:

sending first information to a first device, wherein the first information is configured to instruct the first device to report a carrier phase measurement value of a target subcarrier;
receiving the carrier phase measurement value from the first device.

32. The LMF entity according to claim 31, wherein the first information comprises at least one of following:

a frequency corresponding to the target subcarrier;
an identifier (ID) of the target subcarrier;
an index of a carrier set corresponding to the target subcarrier;
a physical resource block (PRB) index corresponding to the target subcarrier;
a PRB set index corresponding to the target subcarrier;
a positioning frequency layer index value corresponding to the target subcarrier; or
an index value of a component carrier (CC) corresponding to the target subcarrier.

33. The LMF entity according to claim 31, wherein the processor is further configured to read a program in the memory to perform the following process:
sending second information to the first device, wherein the second information is configured to instruct the first device to report an instantaneous carrier phase measurement value of the target subcarrier, or the second information is configured to indicate the first device to report an accumulated carrier phase measurement value of the target subcarrier.

34. The LMF entity according to claim 31, wherein in a case that each carrier phase measurement value corresponds to an Orthogonal Frequency Division Multiplexing (OFDM) symbol, the processor is further configured to read a program in the memory to perform the following processes:

receiving at least one of following carrier phase measurement values of the target subcarrier from the first device:

an instantaneous carrier phase measurement value corresponding to each OFDM symbol;
an accumulated phase measurement value corresponding to each OFDM symbol;
an instantaneous carrier phase measurement value corresponding to each OFDM symbol and a symbol-level timestamp; or
an accumulated phase measurement value corresponding to each OFDM symbol and a symbol-level timestamp;
wherein a granularity of the timestamp is an OFDM symbol.

35. The LMF entity according to claim 31, wherein the processor is further configured to read a program in the memory to perform the following processes:
receiving from the first device at least one of following carrier phase measurement values of the target subcarrier:

an instantaneous carrier phase measurement value corresponding to each resource block;
an accumulated phase measurement value corresponding to each resource block;
a timestamp corresponding to the instantaneous carrier phase measurement value; or
a timestamp corresponding to the accumulated phase measurement value;
wherein a granularity of the timestamp is an OFDM symbol or a resource block.

36. The LMF entity according to claim 31, wherein the carrier phase measurement value comprises at least one of following measurement values:

an absolute phase of arrival (POA); or
a phase difference between the absolute POA and a reference POA.

37. The LMF entity according to claim 31, wherein the processor is further configured to read a program in the memory to perform the following process:
receiving third information from the first device, wherein the third information comprises at least one of the following:

a quantity of resource elements (REs) that differ between a subcarrier actually used to measure and the target subcarrier;
a quantity of symbols that differ between OFDM symbols actually used to measure and target OFDM symbols;
a delay difference between a first path and a second path corresponding to the carrier phase measurement value;
a spectral peak width of a first path corresponding to the carrier phase measurement value;
a root-mean-square error of the carrier phase measurement value; or
a variance of the carrier phase measurement value.

38. The LMF entity according to claim 31, wherein the processor is further configured to read a program in the memory to perform the following process:
receiving fourth information from the first device, wherein the fourth information comprises at least one of following:

a downlink reference signal time difference (DL-RSTD) and a corresponding timestamp;
an uplink relative time of arrival (UL-RTOA) and a corresponding timestamp;
an uplink angle of arrival (UL-AOA) and a corresponding timestamp;
a time difference between receiving and transmitting of the first device and a corresponding timestamp;
an uplink reference signal receiving power (UL-RSRP) and a corresponding timestamp;
a downlink reference signal receiving power (DL-RSRP) and a corresponding timestamp;
an uplink reference signal receiving path power (UL-RSRPP) and a corresponding timestamp; or
a downlink reference signal receiving path power (DL-RSRPP) and a corresponding timestamp;
wherein a granularity of the timestamp is an OFDM symbol.

39. An apparatus of obtaining a carrier phase measurement value, applied to a first device, comprising:

a receiving module, configured to receive first information from a Location Management Function (LMF) entity, wherein the first information is configured to instruct the first device to report a carrier phase measurement value of a target subcarrier;
an obtaining module, configured to obtain the carrier phase measurement value of the target subcarrier; and
a sending module, configured to send the carrier phase measurement value to the LMF entity.

**40.** An apparatus of obtaining a carrier phase measurement value, applied to an LMF entity, comprising:

a fourth sending module, configured to send first information to a first device, wherein the first information is configured to instruct the first device to report a carrier phase measurement value of a target subcarrier;
a third receiving module, configured to receive the carrier phase measurement value from the first device.

**41.** A processor-readable storage medium, storing a computer program, wherein the computer program, when executed by a processor, causes the processor to perform the method of obtaining the carrier phase measurement value according to any one of claims 1 to 11 or perform the method of obtaining the carrier phase measurement value according to any one of claims 12 to 19.

Receiving first information from a Location Management Function (LMF) entity, wherein the first information is configured to instruct the first device to report a carrier phase measurement value of a target subcarrier

101

Obtaining the carrier phase measurement value of the target subcarrier

102

Sending the carrier phase measurement value to the LMF entity

103

**FIG.   1**

o   Instantaneous carrier phase measurement value (icp)

o   Accumulated carrier phase measurement value (acp)

Cycle

4

3

2

1

0

acp5
acp4
acp3
acp2
acp1
acp0
icp0
icp1
icp2
icp3
icp4
icp5

sym0    sym1    sym2    sym3    sym4    sym5         symbol

**FIG. 2**

NUM_SYM_BIAS(UE,k1)=3sym

Resource block n+2

Resource block n+1

Resource block n

k1

NUM_SYM_BIAS(UE,k2)=2sym

k2

NUM_SYM_BIAS(UE,k3)=3sym

k3

One UL Slot

**FIG. 3**

Power

P2

Delay_diff_path_1_2
(delay difference between first and second paths)

P1

Path_1

Path_2

Width_peak_path1 (spectral peak width of first path)

Delay

**FIG. 4**

Sending first information to a first device, wherein the first
information is configured to instruct the first device to report a
carrier phase measurement value of a target subcarrier

201

Receiving the carrier phase measurement value from the first
device

202

**FIG. 5**

RE deviation
=1RE

RE deviation
=2RE

ID of a target
subcarrier

UE

PRU

sym0 sym1 sym2                                                    sym13

**FIG. 6**

**FIG. 7**

**FIG. 8**

y

**FIG. 9**

**FIG. 10**

**FIG. 11**

## INTERNATIONAL SEARCH REPORT

| | International application No. |
|---|---|
| | **PCT/CN2024/076558** |

| A. | CLASSIFICATION OF SUBJECT MATTER |
|---|---|

H04W4/02(2018.01)i; H04W64/00(2009.01)i; H04W24/10(2009.01)i

According to International Patent Classification (IPC) or to both national classification and IPC

| B. | FIELDS SEARCHED |
|---|---|

Minimum documentation searched (classification system followed by classification symbols)

IPC: H04W,H04B

Documentation searched other than minimum documentation to the extent that such documents are included in the fields searched

Electronic data base consulted during the international search (name of data base and, where practicable, search terms used)

CNABS; CNTXT; CNKI; ENTXTC; VEN; IEEE; 3GPP: 定位, 位置管理, 载波相位, 测量值, 索引, 符号, location, management, OFDM, carrier phase, positioning, measure

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113840227 A (DATANG MOBILE COMMUNICATIONS EQUIPMENT CO., LTD.) 24 December 2021 (2021-12-24)<br>claims 1-29, description, paragraphs 3-19 and 36-201, and figures 1-8 | 1-41 |
| A | CN 112543160 A (DATANG MOBILE COMMUNICATIONS EQUIPMENT CO., LTD.) 23 March 2021 (2021-03-23)<br>entire document | 1-41 |
| A | WO 2022194144 A1 (VIVO MOBILE COMMUNICATION CO., LTD.) 22 September 2022 (2022-09-22)<br>entire document | 1-41 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 May 2024** | **15 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/076558**

| Patent document cited in search report | | | Publication date (day/month/year) | Patent family member(s) | | | Publication date (day/month/year) |
|---|---|---|---|---|---|---|---|
| CN | 113840227 | A | 24 December 2021 | WO | 2021259318 | A1 | 30 December 2021 |
| | | | | EP | 4175327 | A1 | 03 May 2023 |
| | | | | US | 2023262646 | A1 | 17 August 2023 |
| CN | 112543160 | A | 23 March 2021 | WO | 2021042852 | A1 | 11 March 2021 |
| | | | | TW | 202112107 | A | 16 March 2021 |
| WO | 2022194144 | A1 | 22 September 2022 | CN | 115119136 | A | 27 September 2022 |

Form PCT/ISA/210 (patent family annex) (July 2022)

**REFERENCES CITED IN THE DESCRIPTION**

**Patent documents cited in the description**

- CN 202310184041X